(19) Europäisches Patentamt
European Patent Office
Office européen des brevets

(11) **EP 4 503 609 A1**

(12) **EUROPEAN PATENT APPLICATION**
published in accordance with Art. 153(4) EPC

(43) Date of publication:
**05.02.2025 Bulletin 2025/06**

(21) Application number: **22935922.9**

(22) Date of filing: **22.12.2022**

(51) International Patent Classification (IPC):
*H04N 19/54* (2014.01)          *H04N 19/597* (2014.01)
*H04N 19/513* (2014.01)         *H04N 19/20* (2014.01)
*H04N 19/70* (2014.01)          *G06T 9/00* (2006.01)
*H04N 19/119* (2014.01)        *H04N 19/96* (2014.01)
*H04N 19/85* (2014.01)

(52) Cooperative Patent Classification (CPC):
**G06T 9/00; H04N 19/119; H04N 19/20;
H04N 19/513; H04N 19/54; H04N 19/597;
H04N 19/70; H04N 19/85; H04N 19/96**

(86) International application number:
**PCT/KR2022/021036**

(87) International publication number:
**WO 2023/191252 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022  KR 20220038920
22.04.2022  KR 20220050428**

(71) Applicant: **LG Electronics Inc.
Yeongdeungpo-gu
Seoul 07336 (KR)**

(72) Inventor: **LEE, Sooyeon
Seoul 06772 (KR)**

(74) Representative: **Plasseraud IP
104 Rue de Richelieu
CS92104
75080 Paris Cedex 02 (FR)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)    A point cloud data transmission method, according to embodiments, may comprise the steps of: encoding point cloud data; and transmitting a bitstream including the point cloud data. A point cloud data reception method, according to embodiments, may comprise the steps of: receiving a bitstream including point cloud data; and decoding the point cloud data.

FIG. 1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.

The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.

The devices and methods according to the embodiments may provide a high-quality point cloud service.

The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;

FIG. 10 illustrates a point cloud decoder according to embodiments;
FIG. 11 illustrates a point cloud decoder according to embodiments;
FIG. 12 illustrates a transmission device according to embodiments;
FIG. 13 illustrates a reception device according to embodiments;
FIG. 14 illustrates an exemplary structure operable in connection with point cloud data transmission/reception methods/devices according to embodiments;
FIG. 15 illustrates inter-frame prediction (inter-prediction) according to embodiments;
FIG. 16 illustrates a compact bounding box according to embodiments;
FIG. 17 illustrates a method of connecting compact bounding boxes according to embodiments;
FIG. 18 illustrates a bitstream containing point cloud data and parameters according to embodiments;
FIG. 19 shows a syntax of a sequence parameter set (SPS) according to embodiments;
FIG. 20 shows a syntax of a geometry parameter set (GPS) according to embodiments;
FIG. 21 shows matching modes according to embodiments;
FIG. 22 shows matching criteria according to embodiments;
FIG. 23 shows a geometry slice header according to embodiments;
FIG. 24 shows matching criteria according to embodiments;
FIG. 25 shows matching criteria according to embodiments;
FIG. 26 shows an attribute parameter set (APS) according to embodiments;
FIG. 27 shows an attribute data unit header according to embodiments;
FIG. 28 illustrates a point cloud data transmission device according to embodiments;
FIG. 29 illustrates a point cloud data reception device according to embodiments;
FIG. 30 illustrates a method of classifying static and dynamic objects for an object compact bounding box according to embodiments;
FIG. 31 illustrates a reference bounding box in a reference frame and a current bounding box in a current frame according to embodiments;
FIG. 32 shows a syntax of an SPS according to embodiments;
FIG. 33 shows a syntax of a GPS according to embodiments;
FIG. 34 shows modes of criteria for dynamic objects according to embodiments;
FIG. 35 shows a syntax of a geometry slice header according to embodiments;
FIG. 36 illustrates a point cloud data transmission device according to embodiments;
FIG. 37 illustrates a point cloud data reception device according to embodiments;
FIG. 38 illustrates a point cloud data transmission method according to embodiments; and
FIG. 39 illustrates a point cloud data reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

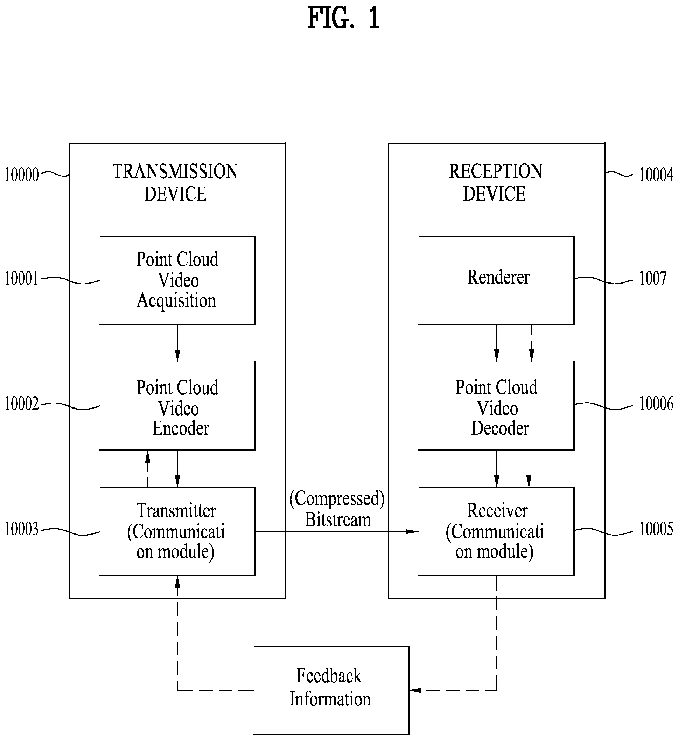

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

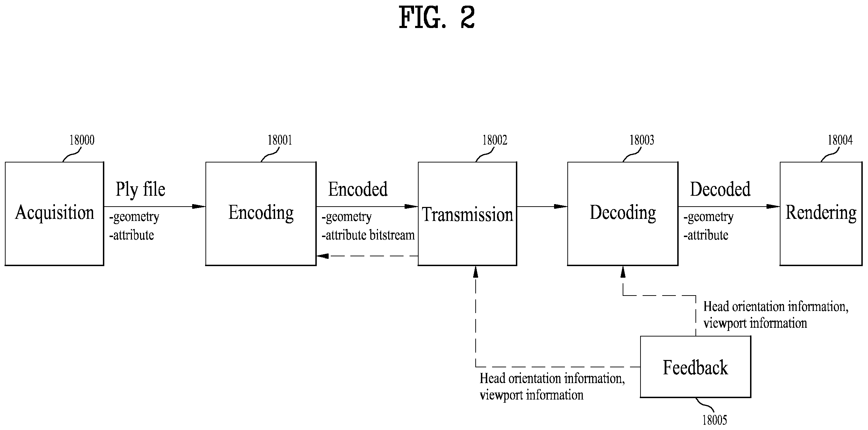

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

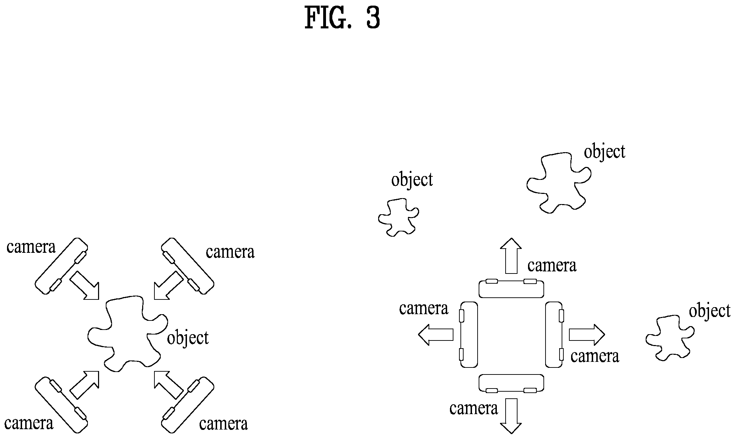

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

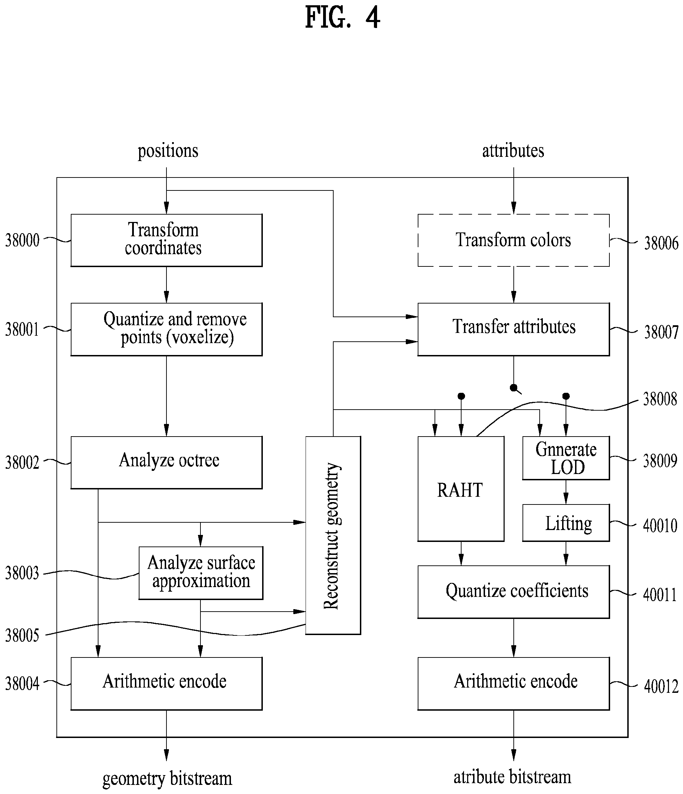

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) may be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

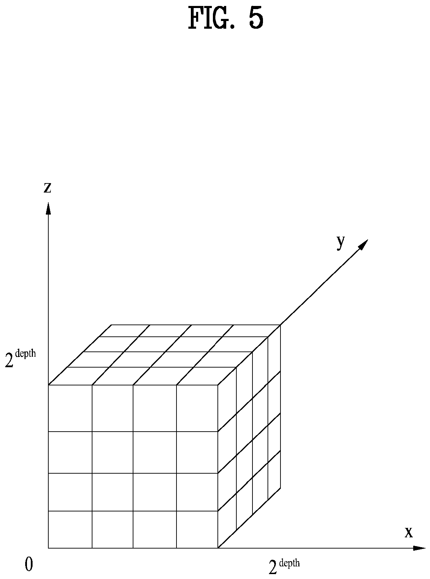

FIG. 5 shows an example of voxels according to embodiments.

FIG. 5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles $(0, 0, 0)$ and $(2^d, 2^d, 2^d)$ is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

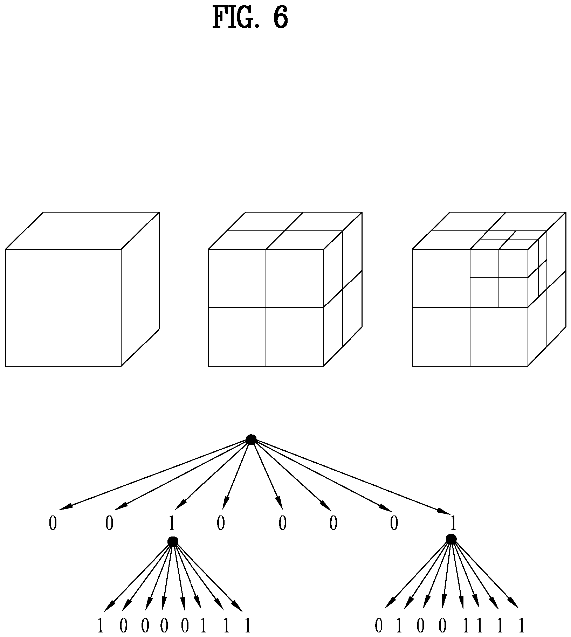

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$ \mathrm{d} = Ceil\left(Log2\left(Max\left(x^{int}_n, y^{int}_n, z^{int}_n, n = 1, ..., N\right) + 1\right)\right) $$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i)} \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix}; \text{ii)} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \text{iii)} \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE 2-1 Triangles formed from vertices ordered 1,...,n

| n | triangles |
|---|-----------|

(continued)

| 3 | (1,2,3) |
|---|---------|
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

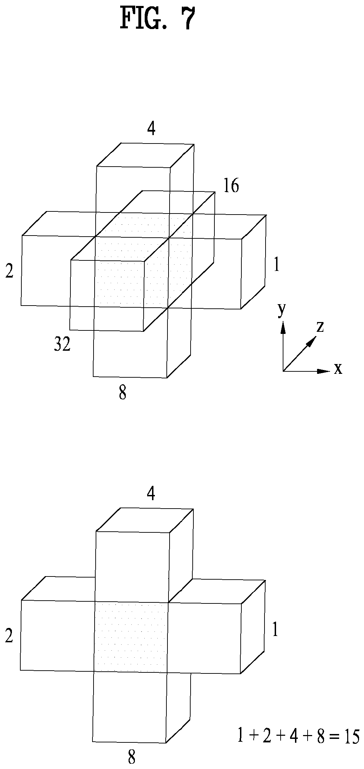

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using 23 = 8 methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The left part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The right part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

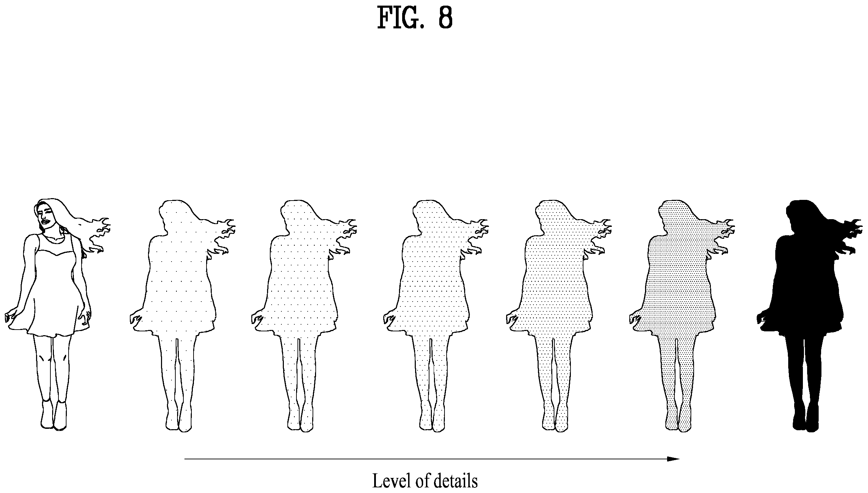

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

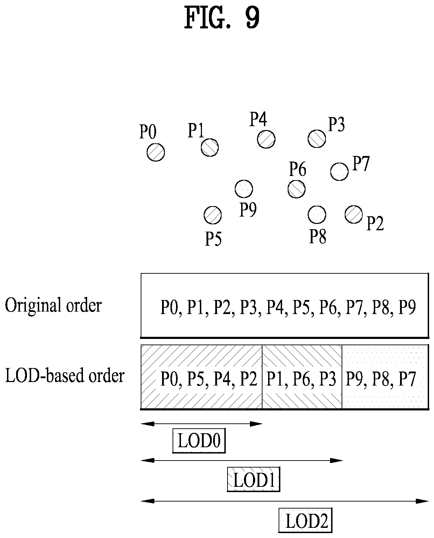

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

```
TABLE Attribute prediction residuals quantization pseudo code
int PCCQuantization(int value, int quantStep) {
if( value >=0) {
return floor(value / quantStep + 1.0 / 3.0);
} else {
return -floor(-value / quantStep + 1.0 / 3.0);

}
}
```

TABLE Attribute prediction residuals inverse quantization pseudo code

```
int PCCInverseQuantization(int value, int quantStep) {

if( quantStep ==0) {

return value;

} else {

return value * quantStep;

}

}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation.

The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (e.g., the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\ x,y,z}$ denotes the average attribute value of voxels at level $l$. $g_{l\ x,y,z}$ may be calculated based on $g_{l+1\ 2x,y,z}$ and $g_{l+1\ 2x+1,y,z}$. The weights for $g_{l\ 2x,y,z}$ and $g_{l\ 2x+1,y,z}$ are $w1 = w_{l\ 2x,y,z}$ and $w2 = w_{l\ 2x+1,y,z}$.

$$\begin{bmatrix} g_{l-1\ x,y,z} \\ h_{l-1\ x,y,z} \end{bmatrix} = T_{w1\ w2} \begin{bmatrix} g_{l\ 2x,y,z} \\ g_{l\ 2x+1,y,z} \end{bmatrix}, \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l\text{-}1\ x,y,z}$ is a low-pass value and is used in the merging process at the next higher level. $h_{l\text{-}1\ x,y,z}$ denotes high-pass coefficients. The high-pass coefficients at each step are quantized and subjected to entropy coding (for example, encoding by the arithmetic encoder 400012). The weights are calculated as $w_{l\text{-}1\ x,y,z} = w_{l\ 2x,y,z} + w_{l\ 2x+1,y,z}$. The root node is created through the $g_{1\ 0,0,0}$ and $g_{1\ 0,0,1}$ as follows.

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

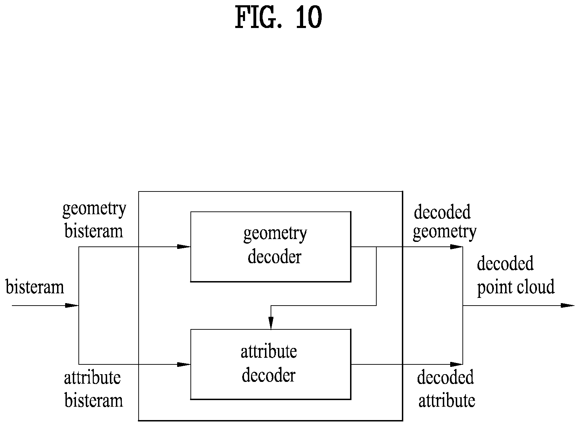

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

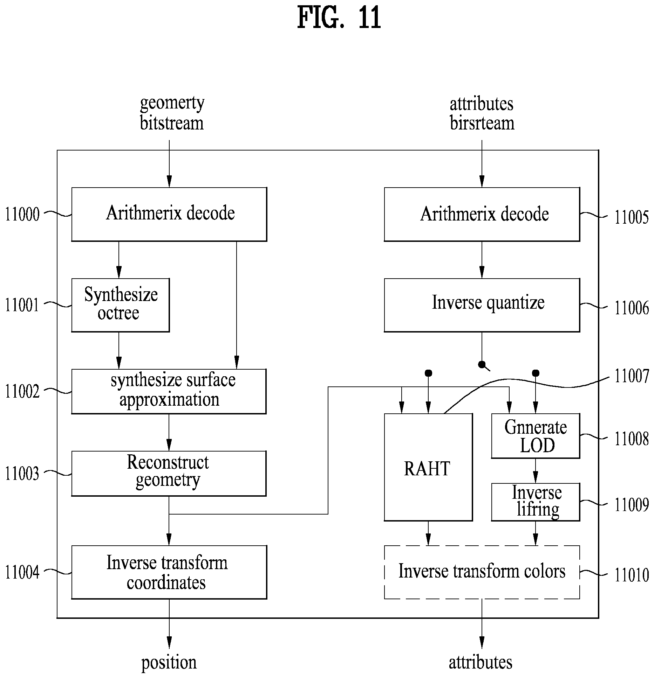

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the reverse process to the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

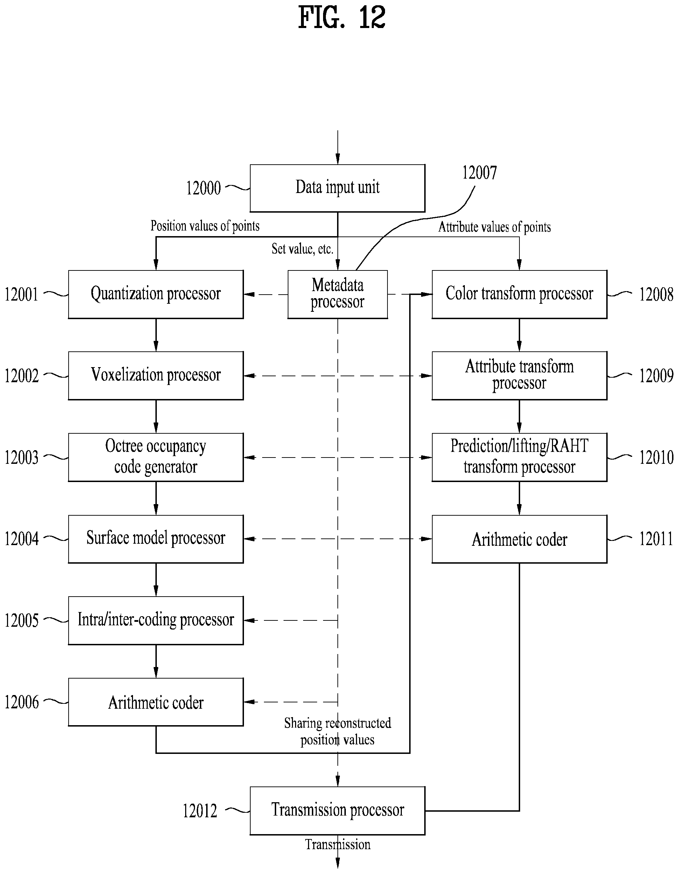

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

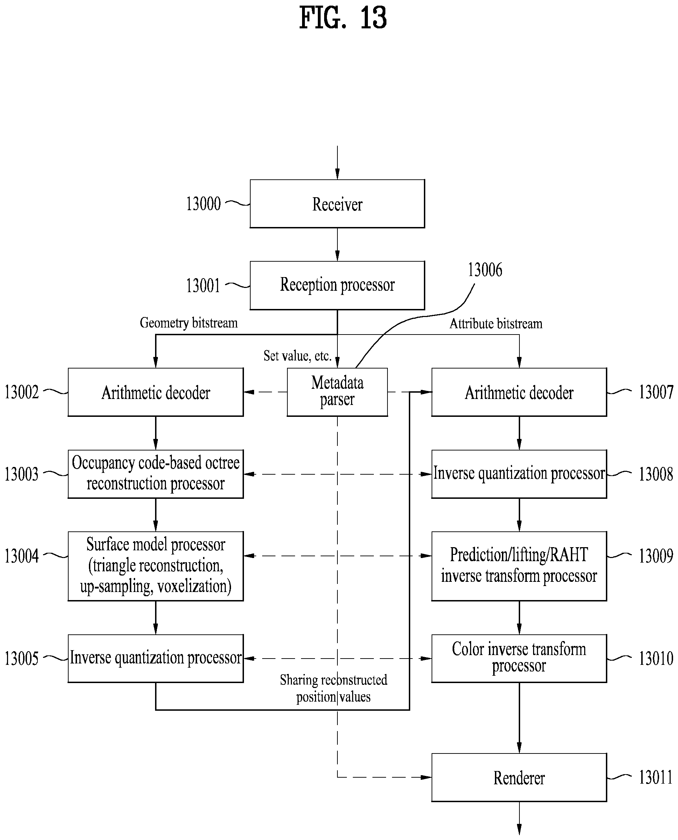

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction/lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 13005 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

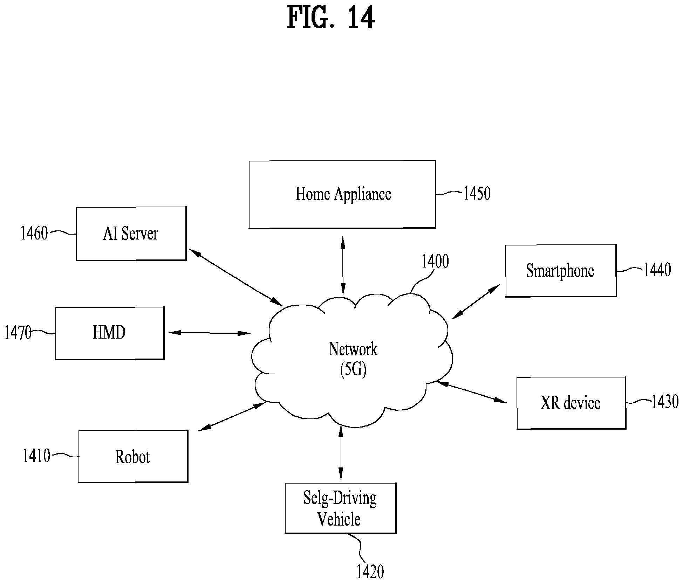

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission device and reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<u><PCC+XR+Mobile phone></u>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

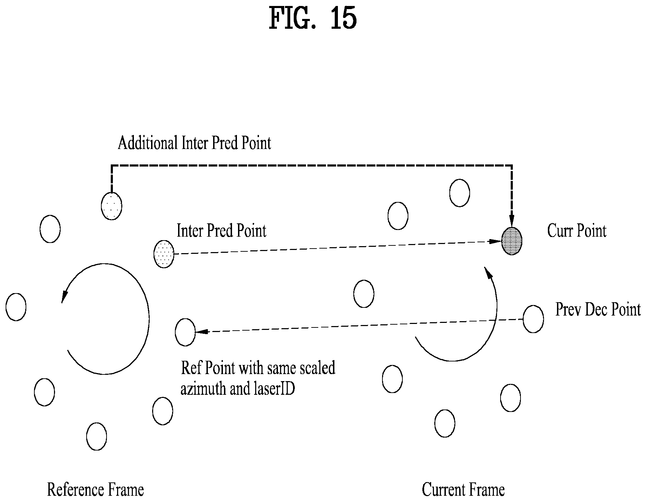

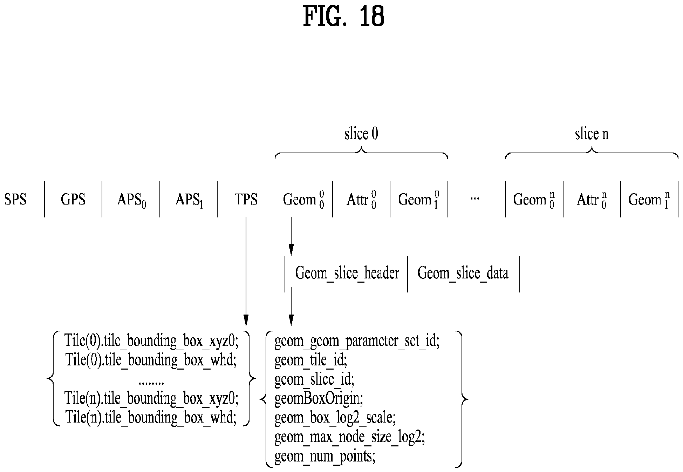

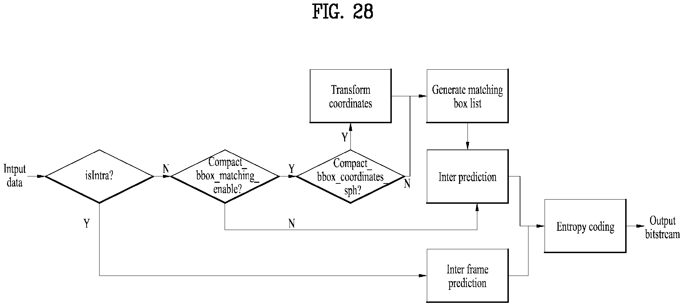

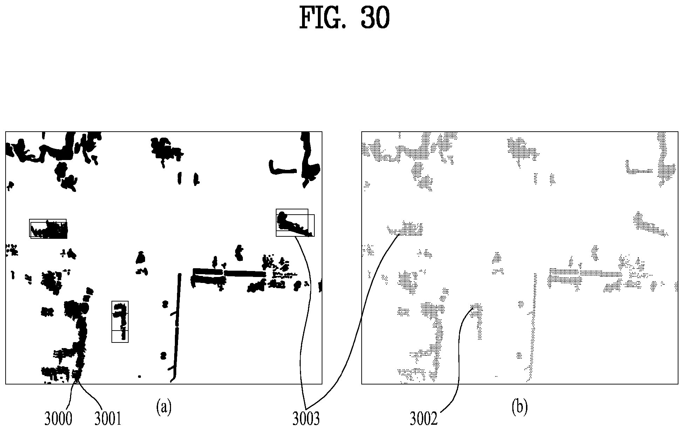

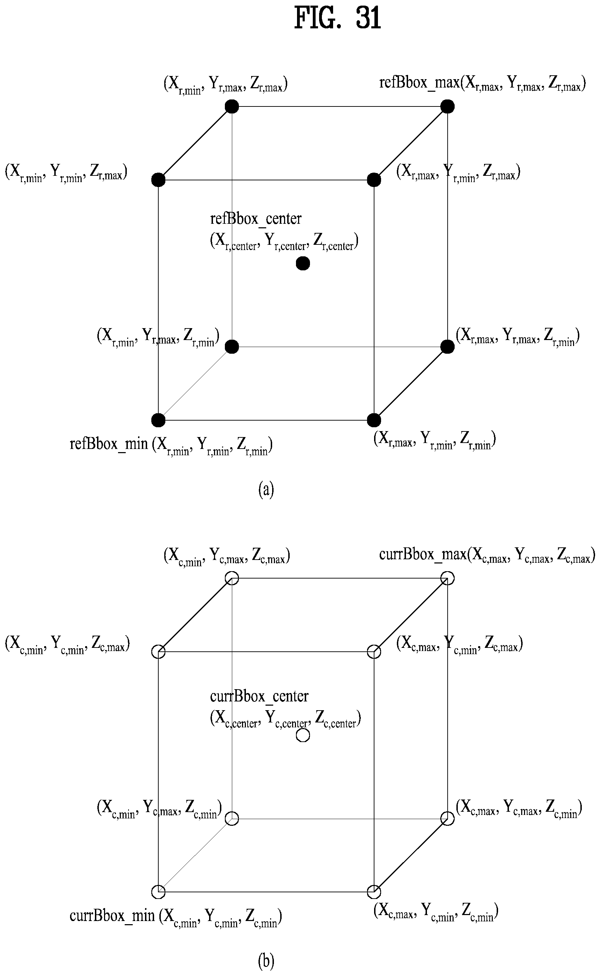

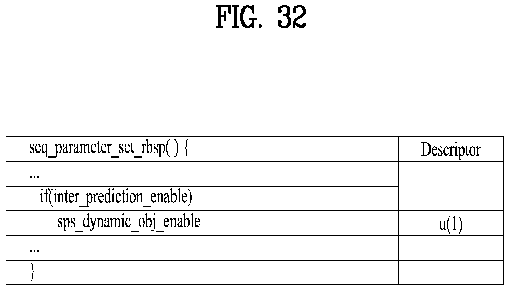

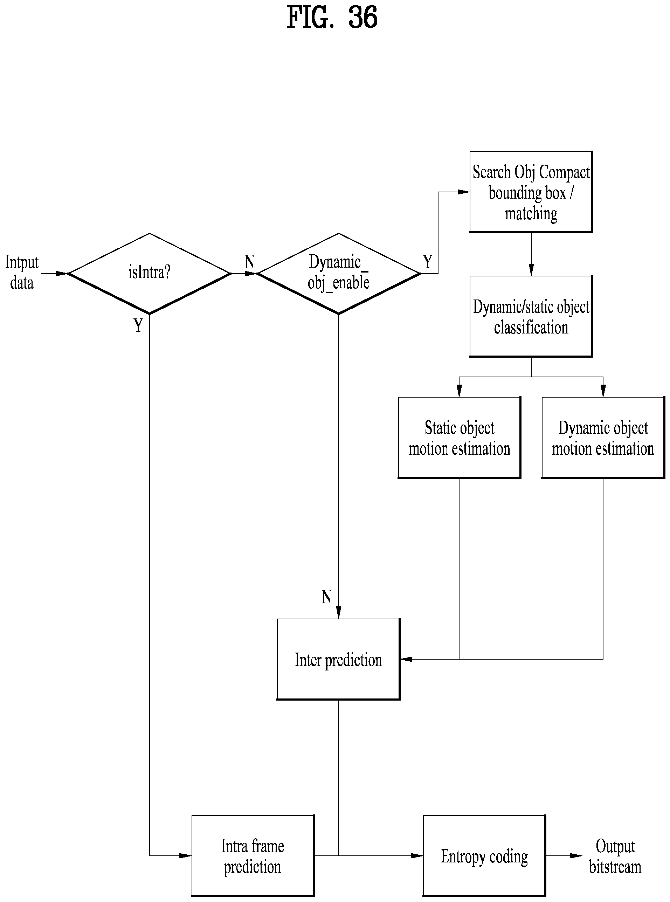

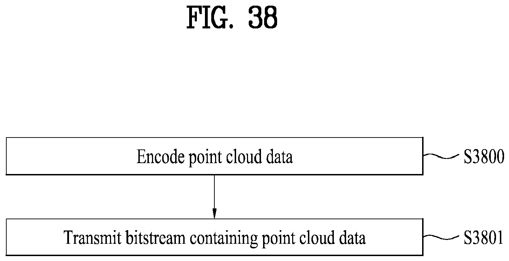

The point cloud data transmission method/device according to embodiments may be construed as a term referring to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, the encoding of FIG. 36, the transmission method of FIG. 38, and the like.

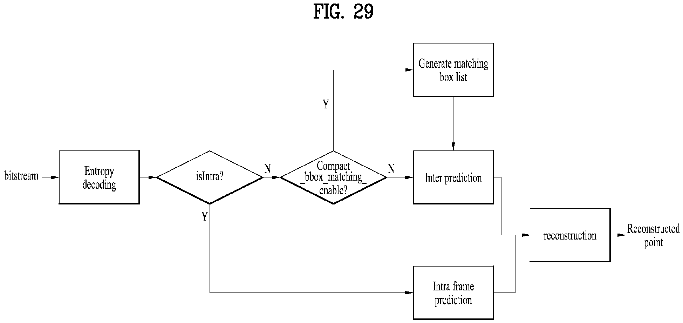

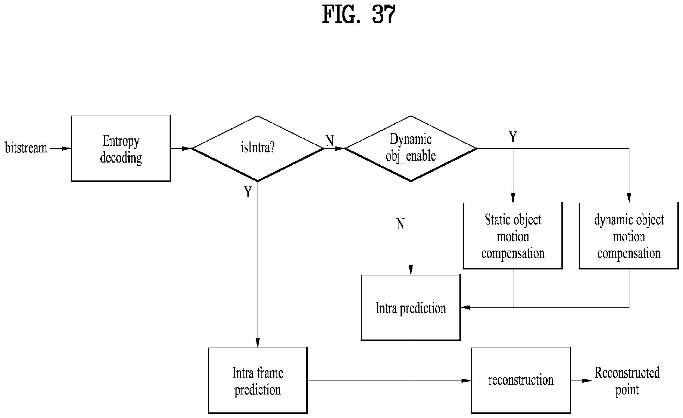

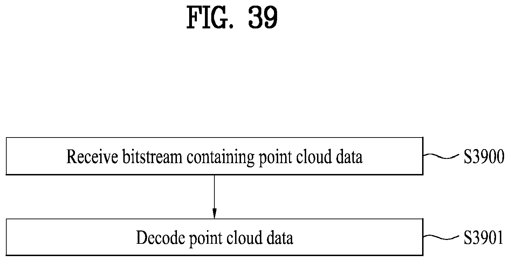

The point cloud data reception method/device according to embodiments may be construed as a term referring to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, the reception method of FIG. 39, and the like.

The method/device for transmitting or receiving point cloud data according to the embodiments may be referred to simply as a method/device.

According to embodiments, geometry data, geometry information, position information, and geometry constituting point cloud data are to be construed as having the same meaning. Attribute data, attribute information, and attributes constituting the point cloud data are to be construed as having the same meaning.

The method/device according to the embodiments may include and perform a method for matching regions for inter-frame prediction of point cloud content (a compact bounding box matching method for inter prediction of point cloud).

In order to increase compression efficiency of point cloud data having one or more frames, the method/device according to the embodiments may predict a position using a compact bounding box to predict a position relationship of nodes in predictive tree geometry with an inter-frame prediction technique.

The methods/devices according to the embodiments may compress and reconstruct data composed of a point cloud. Specifically, for effective compression of a point cloud having one or more frames, significant regions may be extracted and position matching between regions may be performed to predict predictive tree nodes between frames.

FIG. 15 illustrates inter-frame prediction (inter-prediction) according to embodiments.

The point cloud data transmission method/device according to the embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIG. 28, the encoding of FIGS. 30 and 31, the bitstream and parameter generation of FIGS. 32 to 35, the encoding of FIG. 36, and the transmission method of FIG. 38) may encode the point cloud data based on the inter-prediction as shown in FIG. 15.

The point cloud data reception method/device according to the embodiments (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the reception method of FIG. 39) may decode the point cloud data based on the inter-prediction as shown in FIG. 15.

Inter-frame prediction in the predictive tree structure takes one immediately preceding coded frame as a reference frame, and a point whose azimuth is most similar to that of the previously decoded point in the current frame and whose laserID is located in the same position is searched for in the reference frame, and the closest point or the next closest point among the points with a greater azimuth than the point is used as the predictor of the current point. The case of using the closest point as the predictor and the case of using the next closest point as the predictor may be distinguished by a flag to be signaled. In the case of inter-frame prediction, it is determined which point information to be used as the position of the current point, and the corresponding predictor information is delivered to the receiver.

Referring to FIG. 15, when encoding or decoding a current frame containing a point cloud acquired by a camera and/or a sensor, a point acquired in an increasing direction of laser ID and azimuth according to the laser ID may be positioned in the current frame. When encoding (or decoding) the current point, points have been previously decoded, and thus a predicted value may be found in the reference frame for the current point to predict the current point. When the point in the reference frame whose data is most similar to the geometry data and/or attribute data of the current point is found, it is not directly encoded as a value for the current point. Instead, a residual between the predicted value and the current value may be encoded and transmitted, and the receiver may reconstruct the original point value by summing the residual and predicted value in the same way. For accurate and fast prediction, a reference point with the same or most similar azimuth and laser ID to the azimuth and laser ID of the point positioned before the current point may be searched for in the reference frame. Since the reference frame also contains points in the same or similar way as the current frame, a point with an azimuth greater than and closest to the azimuth of the reference point (i.e., a closest azimuth) may be set as a predictor of the current point, or a point with the next closest azimuth to the azimuth of the reference frame may be set as a predictor of the current point. In other words, the geometry data and/or attribute data of the predictor may be most similar to the geometry data and/or attribute data of the current point.

In finding a point to reference in the reference frame to predict the current point in the current frame, the point is searched for in a predefined mapping point list, which is simply takes the first point coded for each azimuth and laserID as each element of the list. For the azimuth, actual azimuth values are not used as they are. Instead, they are grouped into quantized values by range, such that points with different detailed azimuth values are grouped into the same quantized azimuth. This scheme has a disadvantage that the residual becomes large after prediction depending on the position, as points that are significantly different from the previously decoded point in the current frame are grouped together due to the azimuth quantization. In addition, by applying this method, which only considers inter-point prediction, positions belonging to other objects may be predicted just because they are nearby points, even though each object in the content has a different local motion. Predictive geometry coding is a point-by-point prediction, and there is no method for object- or block-level prediction.

Accordingly, the methods/devices according to embodiments include a method of using a compact bounding box (compact bbox) representing an object region to match object compact bboxes of highly correlated positions in order to efficiently perform inter-frame prediction of predictive geometry.

The methods/devices according to embodiments may define regions partitioned on an object-by-object basis in the form of a compact box.

The methods/devices according to embodiments may signal inter-frame relevant region information after defining the regions partitioned on an object-by-object basis in the form of minimal boxes.

The methods/devices according to embodiments may find and define each compact bounding box after partitioning the point cloud into PUs.

The methods/devices according to embodiments may signal matching criteria based on coordinate characteristics for boxes defining regions of objects for sorting and matching.

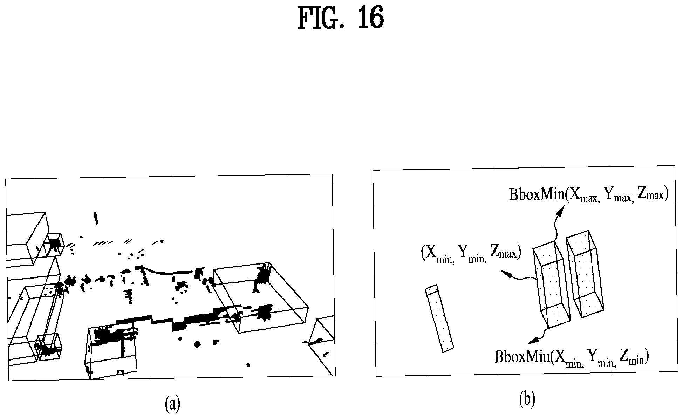

FIG. 16 illustrates a compact bounding box according to embodiments.

The point cloud data transmission method/device according to the embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, the encoding of FIG. 36, and the transmission method of FIG. 38) may generate a (compact) bounding box as shown in FIG. 16, and encode the point cloud data based on the bounding box.

The point cloud data reception method/device according to the embodiments (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the reception method of FIG. 39) may generate a (compact) bounding box as shown in FIG. 16, and may decode the point cloud data based on the bounding box.

Compact bounding boxes for connecting object units may be generated and a list may be configured. A compact bounding box may be referred to as a bounding box for short.

To define a core region for each frame or a region for each object, any method for classifying the points that constitute each object may be used. The result of one of HDBSCAN, DBSCAN, kd-tree, and GMM, which are clustering methods, may be delivered to set the region for each object. Each object may be extracted bvased on the relationship of the distances between points calculated in constructing a tree of predictive geometry. The region of a compact bounding box from each object found through the correlation between points may be defined by setting the maximum value of the bounding box by collecting the greatest value along each axis of the three dimensions and setting the minimum value of the bounding box by collecting the least value along each axis.

For example, as shown in FIG. 16, for the compact bounding box of a region classified as an object in the middle, the minimum bounding box value (BboxMin) and the maximum bounding box value (BboxMax), which are the greatest and least values among the values on each axis of the position information classified into the same object may be found, and the coordinates of the rest of the box may be found by a combination of the two points. The compact bounding box found for each unit separated by an object in the point cloud may be represented as shown in FIG. 16.

Once the region of each object is defined, a list of compact bboxes may be generated by transforming the list to spherical coordinates and sorting the coordinates based on the radius of the maximum bounding box value (BboxMax) or minimum bounding box value (BboxMin) that present in the same frame. When necessary, the Cartesian coordinates may be taken as they are and sorted based on a specific axis. In the case where a frame is segmented into prediction units (PUs) and a compact bbox is defined for each object contained in each PU, the list of compact bboxes for the frame may be generated by sorting the compact bboxes within the PUs according to a specific criterion after each PU is sorted.

The two coordinates (min, max) of the compact bounding box (compact bbox) found for each object may be bound together to create a sortable form.

Referring to FIG. 16, points that make up an object in the frame may be found based on the characteristics of the points. In generating a compact bounding box for an object unit, the compact bounding box may be generated based on the maximum and minimum values along each of the x-, y-, and z-axes. Objects may be distinguished, compact bounding boxes may be generated per object, and a list of the compact bounding boxes may be sorted according to specific criteria. The coordinates may be transformed to spherical coordinates to perform sorting by radius. Sorting may be performed based on a specific axis in the Cartesian coordinate system without transforming the coordinates. In the case where predictive coding is applied, objects within a prediction unit may be distinguished and compact bounding boxes may be generated and sorted.

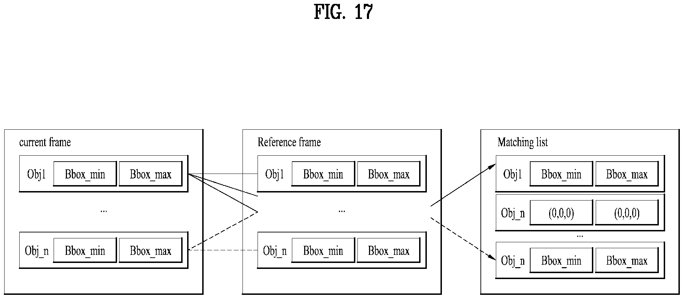

FIG. 17 illustrates a method of connecting compact bounding boxes according to embodiments.

The methods/devices according to the embodiments may generate compact bounding boxes as shown in FIG. 16 and connect the compact bounding boxes as shown in FIG. 17.

The per-object compact bounding boxes between frames may be connected as follows.

The compact bbox list of objects generated in each frame may be compared with a reference value set by the system or user to generate a new compact bbox matching list that can match information about the compact bbox with the closest value. If there is a list of compact bboxes that can be defined as objects in the current frame and the reference frame, the closest value in terms of a specific reference, for example, radius among the coordinates of the bbox min may be found first in the object compact bbox list of the reference frame for the compact bbox corresponding to each object in the current frame, and then the value that is closest by radius to the bounding box minimum coordinate value may be input. The reference value for comparison may be changed, and an object compact bbox of the reference frame that has the closest difference in one of radius, azimuth, laser ID, or elevation may be selected and added to the matching list. If necessary, the list may be sorted based on a specific axis of Cartesian coordinates, the closest value based on the difference in distance (Euclidean, Manhattan, etc.) between the values of BboxMin, the closest value based on the difference in distance between the values of BboxMax, the closest value along a specific axis (X, Y, or Z), or the closest value between the Min or the Max that may define the box after projection may be selected. The information about the object compact bbox in the selected reference frame is removed from the list to avoid duplication, and the object compact bbox list of the remaining reference frames may be used to find the matching compact bbox information for the next object compact bbox in the current frame. When the difference from the reference value is greater than a predetermined threshold, it is assumed that there is no matching compact bbox information, and the information about the corresponding object compact bbox may not be entered, or (0,0,0) information may be entered to indicate that there is no matching compact bbox information. The matching list may be generated such that the size thereof is equal to the number of object lists in the current frame.

The matched regions may be used for prediction in geometry coding and attribute coding. The regions may also be applied to octree geometry coding by enabling block-wise prediction as opposed to point-wise prediction of predictive geometry. In other words, geometry inter-prediction may be performed based on predictive free and/or octree (occupancy tree).

Referring to FIG. 17, the current frame contains n objects, and a bounding box may be generated for each object based on a bounding box maximum and a bounding box minimum by distinguishing the objects included in the frame. A list of n bounding boxes may be generated. Similarly, the reference frame for the current frame may contain m objects and have a list of m bounding boxes for the objects. A matching list may be generated by finding a bounding box in the reference frame that is close to each bounding box in the current frame by comparing each bounding box in the current frame with each bounding box in the reference frame. Comparing the bounding boxes for the objects between two frames implies that there are similar regions close to each other and that point cloud data are present in the regions. Therefore, in predicting and coding the current frame, the matching list may be used to perform efficient inter-prediction. There may be various criteria for finding the most similar bounding box (region) to the current region in the reference frame, as described above. For example, among the minimum coordinate values of the bounding box, the closest value to the bounding box of the current frame based on radius may be found, and the bounding box with the closest radius among the maximum coordinate values of the bounding box may be added to the matching list. In addition to radius, a bounding box in a reference frame with the most similar values of at least one of azimuth, laser ID, and elevation to the bounding box in the current frame may be found and registered in the matching list. The matching list may be generated by sorting the bounding boxes based on a specific axis in a Cartesian coordinate system rather than a spherical coordinate system, and selecting a bounding box with the smallest difference in distance between the bounding box minimum coordinates. The matching list may be generated by selecting a bounding box with the smallest difference in distance between the bounding box maximum coordinates. The matching list may be generated by selecting a bounding box with the closest value on any of the x, y, or z axes. The matching list may be generated by projecting the data and selecting a bounding box with the closest maximum or closest minimum value of the projected box. The selected bounding box information from the reference frame for the current frame may be removed from the list to avoid duplication. When a box similar to the bounding box for a first object in the current frame is found in the reference frame, the bounding box in the reference frame may be removed from the list of objects in the reference frame and registered in the matching list. A box similar to the bounding box for a second object in the current frame may be found in the list of remaining objects in the reference frame. The number of bounding boxes stored in the matching list may be equal to the number of objects in the list of objects in the current frame.

FIG. 18 illustrates a bitstream containing point cloud data and parameters according to embodiments.

The point cloud data transmission method/device according to the embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIG. 28, the encoding of FIGS. 30 and 31, the bitstream and parameter generation of FIGS. 32 to 35, the encoding of FIG. 36, and the transmission method of FIG. 38) may encode point cloud data, generate related parameters, and generate and transmit a bitstream as shown in FIG. 18.

The point cloud data reception method/device according to the embodiments (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the reception method of FIG. 39) may receive and parse the bitstream as shown in FIG. 18 and decode the point cloud data based on the parameters.

In generating the bitstream, the method/device according to the embodiments may define a compact bounding box for defining an object for each frame, and may define components for matching the inter-frame object compact bounding boxes. A sequence parameter set of the bitstream according to embodiments indicates that the compact bounding boxes (compact bboxes) of objects have been matched for inter-prediction. The sequence parameter set may be referred to as sequence signaling information or the like. A geometry parameter set (GPS) carries initial parameters for connecting object compact bounding boxes. The GPS may be referred to as geometry signaling information or the like. A geometry slice unit may carry detailed information for connecting the object compact bounding boxes.

While the signaling (parameter) information according to the embodiments has been described in terms of its use in geometry, the information may be shared for attribute coding, and the position of the signaling may be added to a higher/lower level syntax structure depending on the purpose.

Related information may be signaled to add/perform embodiments. Hereinafter, parameters (which may be referred to as metadata, signaling information, etc.) according to embodiments may be generated in a process of a transmitter according to embodiments described below, and delivered to a receiver according to embodiments for use in a reconstruction process. For example, the parameters according to the embodiments may be generated in a metadata processor (or metadata generator) of the transmission device according to the embodiments described below and acquired by a metadata parser of the reception device according to the embodiments described below. The configuration of the encoded point cloud will be described with reference to each figure.

Abbreviations used herein are: SPS: Sequence Parameter Set; GPS: Geometry Parameter Set; APS: Attribute Parameter Set; TPS: Tile Parameter Set; Geom: Geometry bitstream = geometry slice header + geometry slice data; Attr: Attribute bitstream = attribute brick header + attribute brick data. Slice, brick, and data unit are the encoding/decoding units of point cloud data. The terms may be interpreted to correspond to each other.

Referring to FIG. 18, the bitstream may include SPS, GPS, APS, TPS, and TPS. There may be a plurality of APSs. The TPS may include information about tile bounding boxes for a plurality of tiles. For example, it may include position (coordinate) information, size information (width, depth, height), etc. about the bounding box of a tile. The bitstream may contain geometry information (data) and attribute information (data) on a per-slice (data unit) basis. Because point cloud data is encoded on a per-slice (data unit) basis, the bitstream may contain a plurality of slices (data units). A slice (data unit) may include geometry information (position) and one or more pieces of attribute information (color, reflectance, etc.) about one point. For example, slice (data unit) 0 may include geometry data, and the geometry data may include a geometry slice header and geometry slice data. The geometry slice header may contain information about the geometry. For example, it may contain information such as geometry parameter set ID, geometry tile ID, geometry slice ID, the origin of a box (bounding box) containing the geometry, logarithmic scale of the box, the maximum node size, and the number of points.

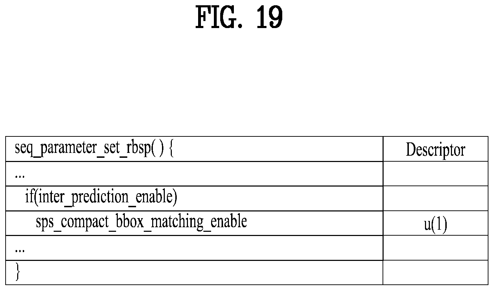

FIG. 19 shows a syntax of a sequence parameter set (SPS) according to embodiments.

FIG. 19 shows an SPS contained in the bitstream of FIG. 18. The SPS may contain information for configuring object compact bounding box matching. The information for configuring object compact bounding box matching may be added to the SPS and signaled.

sps_compact_bbox_matching_enable: May signal whether the box-by-box prediction that defines the object region is enabled when inter-prediction is applied to the sequence. When sps_compact_bbox_matching_enable is TRUE, it may mean that prediction has been performed per object region. When it is FALSE, it may mean that prediction has been performed using the conventional method.

The sequence parameter set may further contain the following elements:

simple_profile_compatibility_flag: simple_profile_compatibility_flag equal to 1 specifies that the bitstream conforms to a simple profile. simple_profile_compatibility_flag equal to 0 specifies that the bitstream conforms to a profile other than the simple profile.

dense_profile_compatibility_flag: When equal to 1, it specifies that the bitstream conforms to a Dense profile. density_profile_compatibility_flag equal to 0 specifies that the bitstream conforms to a profile other than the Dense profile.

predictive_profile_compatibility_flag: When equal to 1, it specifies that the bitstream conforms to a predictive profile. predictive_profile_compatibility_flag equal to 0 specifies that the bitstream conforms to a profile other than the predictive profile.

main_profile_compatibility_flag: When equal to 1, it specifies that the bitstream conforms to the main profile. main_profile_compatibility_flag equal to 0 specifies that the bitstream conforms to a profile other than the main profile.

reserved_profile_compatibility_18bits: Shall be equal to 0 in bitstreams conforming to this version of this document. Other values for reserved_profile_compatibility_18bits are reserved for future use by ISO/IEC. The decoder shall ignore the value of reserved_profile_compatibility_18bits.

slice_reordering_constraint_flag: When equal to 1, it indicates that the bitstream is sensitive to reordering and removal of data units. slice_reordering_constraint_flag equal to 0 indicates that the bitstream is insensitive to reordering and removal of data units.

unique_point_positions_constraint_flag: When equal to 1, it indicates that all output points have unique positions in each point cloud frame that references the current SPS. unique_point_positions_constraint_flag equal to 0 indicates that two or more output points may have the same position in any point cloud frame that references the current SPS.

level_idc: Indicates the level to which the bitstream conforms as specified in Annex A. The bitstream shall not contain any value of level_idc other than the values specified in Annex A. Other values of level_idc are reserved for future use by ISO/IEC.

sps_seq_parameter_set_id: Provides an identifier for the SPS such that it may be referenced by other syntax elements. sps_seq_parameter_set_id shall be 0 in bitstreams that conform to this version of this document. Other values of sps_seq_parameter_set_id are reserved for future use by ISO/IEC.

frame_ctr_lsb_bits: Specifies the length of the syntax element frame_ctr_lsb in bits.

slice_tag_bits: Specifies the length of the syntax element slice_tag in bits.

seq_origin_bits: Specifies the length of the syntax element seq_origin_xyz[ k ] in bits.

seq_origin_xyz[ k ] and seq_origin_log2_scale: Specify the origin of the sequence local coordinate system. The index k is the k-th X, Y, or Z component of the origin coordinates. When not present, the values of seq_origin_xyz[ k ] and seq_origin_log2_scale are inferred to be 0.

The array SeqOrigin is the origin of the sequence local coordinate system:

$$\text{SeqOrigin}[k] = \text{seq\_origin\_xyz}[k] << \text{seq\_origin\_log2\_scale}$$

seq_bounding_box_size_bits: The length of the syntax element seq_bounding_box_size_minus1_xyz[ k ] in bits.

seq_bounding_box_size_xyz_minus1[ k ] plus 1 specifies the k-th component of the width, height, and depth of the coded volume dimensions in the output coordinate system, respectively. When not present, the coded volume dimensions are undefined.

seq_unit_numerator_minus1, seq_unit_denominator_minus1, and seq_unit_in_metres_flag: Specify the lengths of the X, Y, and Z unit vectors in the output coordinate system.

seq_global_scale_factor_log2, seq_global_scale_refinement_num_bits, and seq_global_scale_refinement_factor: Specify a fixed decimal scale factor used to derive output point positions from positions in the sequence local coordinate system.

seq_global_scale_factor_log2: Used to derive a global scale factor to apply to the positions in the point cloud.

seq_global_scale_refinement_num_bits: The length of the syntax element seq_global_scale_refinement_factor in bits. When seq_global_scale_refinement_num_bits is equal to 0, no segmentation is applied.

seq_global_scale_refinement_factor: Specifies the refinement for the global scale value. When not present, seq_global_scale_refinement_factor is inferred to be equal to 0.

sps_num_attributes: Specifies the number of attributes in the coded point cloud. It is a requirement of bitstream conformance that every slice has an attribute data unit corresponding to every attribute component listed in the SPS.

attribute_dimension_minus1[ attrId ] plus 1 specifies the number of components of the attrId-th attribute.

attribute_instance_id[ attrId ]: Specifies the instance identifier for the attrId-th attribute.

attribute_bitdepth_minus1[ attrId ] plus 1 specifies the bit depth of each component of the attrId-th attribute signal(s).

known_attribute_label_flag[ attrId ], known_attribute_label[ attrId ], and attribute_label_oid[ attrId ]: Identify the type of data passed in the attrId-th attribute. known_attribute_label_flag[ attrId ] indicates whether the attribute is identified by the value of known_attribute_label[ attrId ] or by the object identifier attribute_label_oid[ attrId ].

The attribute type identified by known_attribute_label may be specified. When the value of known_attribute_label is unspecified, it is reserved for future use by ISO/IEC.

The attribute type may indicate Colour, Reflectance, Opacity, Frame index, Frame number, Material identifier, Normal vector, etc.

num_attribute_parameters: Specifies the number of attribute parameter sets in the bitstream. The attribute parameters that are signaled in the sequence parameter set are applied to all data units in the coded point cloud sequence.

axis_coding_order: Specifies the correspondence between the X, Y, and Z output axis labels and the three position components of all points in the reconstructed point cloud.

bypass_stream_enabled_flag equal to 1 specifies that bypass coding mode may be used when reading the bitstream. bypass_stream_enabled_flag equal to 0 specifies that bypass coding mode is not used when reading the bitstream.

entropy_continuation_enabled_flag equal to 1 indicates that the initial entropy context state of a slice may depend on the final entropy context state of the preceding slice. entropy_continuation_enabled _flag equal to 0 specifies that the initial entropy context state of each slice is independent. entropy_continuation_enabled_flag being equal to 0 when slice_reordering_constaint_flag is equal to 0 is a requirement of bitstream conformance.

sps_extension_flag equal to 0 specifies that the syntax element sps_extension_data_flag is not present in the SPS syntax structure. sps_extension _flag shall be equal to 0 in bitstreams that conform to this version of this document. The value 1 for sps_extension_flag is reserved for future use by ISO/IEC. The decoder shall ignore any syntax elements sps_extension_data_flag that follow the value of 1 for sps_extension_flag in the SPS syntax structure.

sps_extension_data_flag may have any value. Its presence and value does not affect decoder conformance to the profiles specified in Annex A. Decoders conforming to this version of this document shall ignore all syntax elements sps_extension_data_flag.

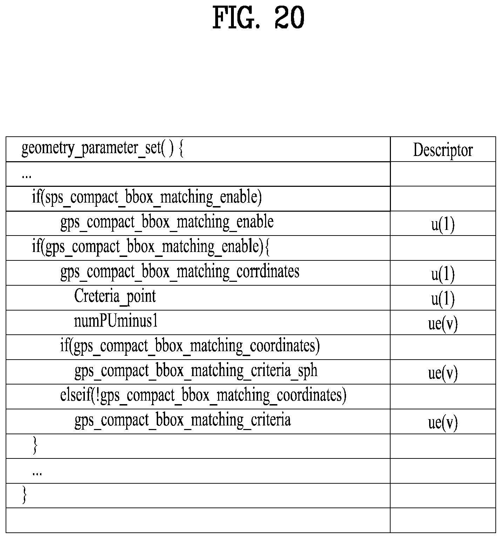

FIG. 20 shows a syntax of a geometry parameter set (GPS) according to embodiments.

FIG. 20 shows a GPS contained in the bitstream of FIG. 18. The GPS may contain information for configuring object compact bounding box matching. The information for configuring object compact bounding box matching may be added to the GPS.

gps_compact_bbox_matching_enable: When sps_compact_bboxmatching_enable is TRUE, gps_compact_bbox_matching_enable may signal whether prediction per box that defines an object region is performed in geometry coding on a frame-by-frame basis. When sps_compact_bbox_matching_enable information is omitted at the SPS level, gps_compactbbox_matching_enable may operate independently and may be applied when prediction is needed per object region or per specific region regardless of the geometry coding method. When gps_compact_bbox_matching_enable is TRUE, it may mean that the prediction has been performed per object region. When it is FALSE, it may mean that the prediction has been performed using the conventional method.

gps_compact_bbox_matching_coordinates: When gps_compact_bbox_matching_enable is TRUE, gps_compact_bbox_matching_coordinates signals the type of the values of the coordinate information about the object compact bounding box. When it is TRUE, it means that the value is stored based on the spherical coordinates. When it is FALSE, it may mean that the value is stored based on the Cartesian coordinates.

Creteria_point: May signal whether matching between boxes should be based on the minimum (min) or maximum (max) value of the bounding box. When it is TRUE, it may mean matching is performed based on the min value of the bounding box. When it is FALSE, it may mean matching is performed based on the max value of the bounding box.

numPUminus1: Indicates the number of segments to make when searching for an object after segmenting each region of the point cloud to define a compact bounding box of the object. When equal to 0, it may indicate no segmentation. The point cloud may be divided into numPUminus1+1 segments.

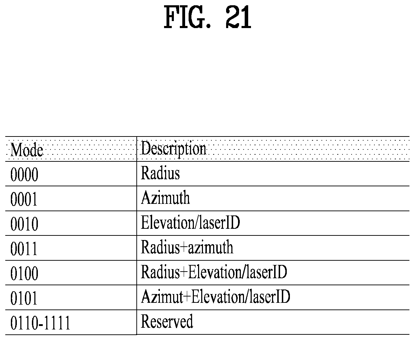

gps_compact_bbox_matching_criteria_sph: When gps_compact_bbox_matching_enable is TRUE, gps_compact_bbox_matching_criteria_sph may indicate that the matching list is found based on spherical coordinates, and, for the spherical coordinates, it may indicate the parameter forming the basis for matching (see FIG. 21).

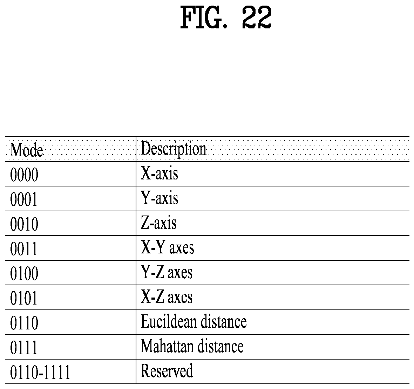

gps_compact_bboxmatching_criteria: When gps_compact_bbox_matching_enable is FALSE, gps_compact_bbox_matching_criteria may indicate that the matching list is found based on Cartesian coordinates, and for the Cartesian coordinates, it may indicate the parameter forming the basis for matching (see FIG. 22).

GPS may further contain the following information.

gps_geom_parameter_set_id identifies the GPS for other DUs to reference.

gps_seq_parameter_set_id identifies the active SPS with sps_seq_parameter_set_id.

slice_geom_origin_scale_present specifies whether slice_geom_origin_log2_scale is present (when equal to 1) or absent (when equal to 0) in the GDU header. slice_geom_origin_scale_present equal to 0 indicates that the slice origin scale is specified by gps_geom_origin_log2_scale.

gps_geom_origin_log2_scale specifies the scale factor used to derive the slice origin from slice_geom_origin_xyz when slice_geom_origin_scale_present is equal to 0.

geom_dup_point_counts_enabled specifies whether duplicate points can be signaled in the GDU by duplicate counts per point (when equal to 1) or not (when equal to 0).

geom_dup_point_counts_enabled equal to 0 does not prohibit coding the same point position multiple times within a single slice by means other than the syntax element direct_dup_point_cnt, occ_dup_point_cnt, or ptn_dup_point_cnt.

geom_tree_type equal to 0 specifies that the slice geometry is coded using an occupancy tree (7.3.3.4). geom_tree_type equal to 1 indicates that the slice geometry is coded using a predictive tree (7.3.3.8).

gps_extension_present indicates whether the syntax element gps_extension_data is present (when equal to 1) or absent (when equal to 0) in the GPS syntax structure. gps_extension_present is 0 in bitstreams that conform to this version of this document.

gps_extension_data may have any value. Its presence and value do not affect the decoder conformance to profiles specified in this version of this document. The decoder may ignore all syntax elements of gps_extension_data.

geom_angular_enabled indicates that slice geometry is coded (when equal to 1) or not (when equal to 0) based on information about a beam set positioned and rotated along the V axis of the angle origin. When geom_angular_enabled is enabled, point positions are assumed to be sampled along the rays projected by the beams.

slice_angular_origin_present specifies whether the slice-related angular origin is signaled in the GDU header (when equal to 1) or not (when equal to 0). slice_angular origin_present equal to 0 indicates that the angular origin is gps_angular_origin_xyz. When not present, slice_angular_origin_present is inferred to be 0.

gps_angular_origin_bits_minus1 plus 1 indicates the length of each syntax element gps_angular_origin _xyz in bits.

gps_angular_origin_xyz[$k$] indicates the -th XYZ coordinate of the angular origin in the coding coordinate system.

num_beams_minus1 plus 1 indicates the number of beams listed by the GPS.

beam_elevation_init and beam_elevation_diff[$i$] together indicate the beam elevation as a slope above the S-T plane. The elevation slope of the -th beam is represented by the expression BeamElev[i]. It is a binary fixed-point value with 18 decimal bits.

beam_voffset_init and beam_voffset_diff[$i$] together indicate the V-axis offset of the listed beams from the angular origin. The offset is specified in units of the coding coordinate system. The offset of the -th beam is specified by the expression BeamOffsetV[$i$].

beam_steps_per_rotation_init_minus1 and beam_steps_per_rotation_diff[$i$] indicate the number of steps taken per rotation by the rotating beam. The value for the -th beam is specified by the expression BeamStepsPerRev[$i$].

ptree_ang_azimuth_pi_bits_minus11 plus 11 indicates the number of bits indicating half a rotation of the beam around the V axis. Half the rotation is $\pi$ radians.

ptree_ang_radius_scale_log2 indicates the factor used to scale the radial angular coordinates of a point during the transformation to Cartesian coordinates.

ptree_ang_azimuth_step_minus1 plus 1 indicates the expected change in azimuth of a beam rotating between the coded points. The azimuth prediction residual used for coding the angle prediction tree may be coded as a multiple of ptree_ang_azimuth_step_minus1 + 1 and the remainder.

occtree_point_cnt_list_present indicates that the GDU footer lists the number of points at each occupancy tree level (when equal to 1) or not (when equal to 0). When not present, occtree_point_cnt_list_present is inferred to be 0.

occtree_direct_coding_mode greater than 0 indicates that the point position may be coded by an appropriate direct node in the occupancy tree. occtree_direct_coding_mode equal to 0 indicates that the direct node should not be present in the occupancy tree.

As the value of occtree_direct_coding_mode increases, the rate of direct node qualification generally increases.

occtree_direct_joint_coding_enabled indicates that a direct node for coding two points should jointly code positions (when equal to 1) or not (when equal to 0) according to a specific ordering of the points.

occtree_coded_axis_list_present equal to 1 indicates that the GDU header contains the syntax element occtree _coded_axis, which is used to derive the node size for each occupancy tree level. occtree_coded_axis_list_present equal to 0 indicates that the syntax element occtree_coded_axis is not present in the GDU syntax and that the occupancy tree indicates a three-dimensional volume specified by the tree depth.

occtree_neigh_window_log2_minus1 plus 1 indicates the number of occupancy tree node positions that form each availability window within the tree level. Nodes outside the window are not available in processes related to the nodes within the window. occtree_neigh_window_log2_minus1 equal to 0 indicates that only sibling nodes should be considered available to the current node.

occtree_adjacent_child_enabled indicates that an adjacent child of the adjacent occupancy tree node is used for bit occupancy contextualization (when equal to 1) or not (when equal to 0). When not present, occtree_adjacent_child_enabled is inferred to be 0.

occtree _intra_pred_max_nodesize_log2 minus 1 indicates the maximum size of occupancy tree nodes suitable for in-slice occupancy prediction. When not present, occtree_intra_pred_max_nodesize_log2 is inferred to be 0.

occtree_bitwise_coding indicates that the node occupancy bitmap is coded using a syntax element occupancy _bit (when equal to 1) or using a pre-coded syntax element occupancy _byte (when equal to 0).

occtree_planar_enabled indicates that the coding of the node occupancy bitmap is performed partially by signaling of occupied and unoccupied planes (when equal to 1) or not (when equal to 0). When not present, occtree_planar_enabled is inferred to be 0.

occtree_planar_threshold[$i$] indicates the threshold used in part to determine axis-specific suitability for planar occupancy coding. The threshold is expressed from the most likely planar axis ($i$ = 0) to the least likely ($i$ = 2). Each threshold value represents the minimum likelihood of an eligible axis for which occ_single_plane is expected to be 1. The range [8, 120 ] for occtree_planar_threshold corresponds to the likelihood interval [0, 1).

When present, occtree_direct_node_rate_minus1 indicates that only occtree_direct_node_rate_minus1 + 1 nodes out of all 32 eligible nodes may be coded as direct nodes.

occtree_planar_buffer_disabled indicates that contextualization of per-node occupied planar positions using planar positions of previously coded nodes should be disabled (when equal to 1) or not (when equal to 0). When not present, occtree_planar_buffer_disabled is inferred to be 0.

geom_scaling_enabled indicates that the coded geometry should be scaled (when equal to 1) or not (when equal to 0) in the geometry decoding process.

geom_qp indicates the geometry QP before adding an offset per slice and per node.

geom_qp_mul_log2 indicates the scaling factor to apply to the geometry QP. Exp2(3 - geom_qp_mul_log2) QP values are given every time the scaling step size is doubled.

ptree_qp_period_log2 indicates the period at which the predictive tree node QP offset is signaled. The period is one for all Exp2(ptree_qp_period_log2) nodes.

occtree_direct_node_qp_offset indicates the offset relative to the slice geometry QP for scaling direct node coded point positions.

FIG. 21 shows matching modes according to embodiments.

The matching criteria indicated by gps_compact_bboxmatching _criteria_sph in FIG. 20 is shown in FIG. 21.

Matching between bounding boxes may be performed based on a close reference value, based on at least one of Radius, Azimuth, Elevation/laserID, Radius+Azimuth, Radius+Elevation/laserID, and Azimuth + Elevation/laserID being signaled (see FIG. 17, etc.).

FIG. 22 shows matching criteria according to embodiments.

FIG. 22 shows values of gps_compact bbox_matching_criteria of FIG. 20.

Based on at least one criterion, such as an X-axis, a Y-axis, a Z-axis, X and Y axes, Y and Z axes, X and Z axes, Euclidean distance, or Mahattan distance, matching may be performed between bounding boxes that have the closest value to the criterion (see FIG. 17 and the like).

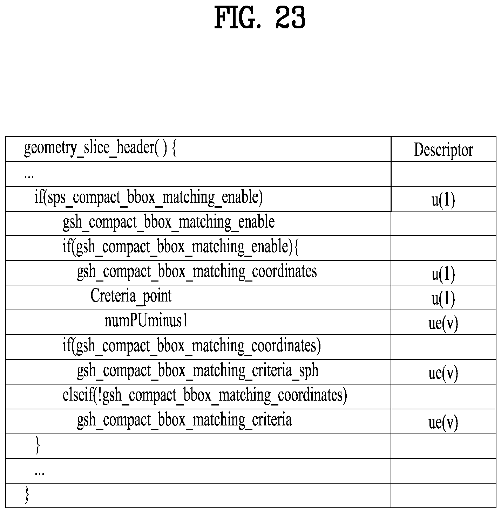

FIG. 23 shows a geometry slice header according to embodiments.

FIG. 23 shows a slice header contained in the bitstream of FIG. 18, wherein the slice header may be referred to as a data unit header or the like.

The geometry slice header may contain information for configuring object compact bounding box matching. The information for configuring object compact bounding box matching can be added to the geometry slice header.

gsh _compact bbox_matching_enable: When gps_compact bbox_matching_enable is TRUE, gsh_compact_bbox_matching_enable may signal whether prediction per box that defines an object region is performed in geometry coding on a slice-by-slice basis. When gps_compact_bbox_matching_enable information is omitted at the GPS level, gsh_compact_bbox_matching_enable may operate independently and may be applied when prediction is needed per object region or per specific region regardless of the geometry coding method. When gsh_compact_bbox_matching_enable is TRUE, it may mean that the prediction has been performed per object region. When it is FALSE, it may mean that the prediction has been performed using the conventional method.

gps_compact_bbox_matching_coordinates: When gsh_compact_bbox_matching_enable is TRUE, gps_compact bbox_matching_coordinates signals the type of the values of the coordinate information about the object compact bounding box. When it is TRUE, it means that the value is stored based on the spherical coordinates. When it is FALSE, it may mean that the value is stored based on the Cartesian coordinates.

Creteria_point: May signal whether matching between boxes should be based on the minimum (min) or maximum (max) value of the bounding box. When it is TRUE, it may mean matching is performed based on the min value of the bounding box. When it is FALSE, it may mean matching is performed based on the max value of the bounding box.

numPUminus1: Indicates the number of segments to make when searching for an object after segmenting each region of the point cloud to define a compact bounding box of the object. When equal to 0, it may indicate no segmentation. The point cloud may be divided into numPUminus1+1 segments.

gsh _compact bbox_matching_criteia_sph: When gsh_compact_bbox_matching_enable is TRUE, gps_compact_bbox_matching_criteria_sph may indicate that the matching list is found based on spherical coordinates, and, for the spherical coordinates, it may indicate the parameter forming the basis for matching. Among the mode values, 0 may indicate that radius is considered, 1 may indicate that azimuth is considered, 2 may indicate that elevation or laserID is considered, 3 may indicate that both radius and azimuth are considered, and 4 may indicate that both radius and elevation or laserID are considered, and 5 indicates that both azimuth and elevation or laserID are considered. Any parameter based on spherical coordinates may be added to the criteria to be considered.

gsh _compact_bbox_matching_criteria: When gsh_compact_bbox_matching_enable is FALSE, gsh_compact_bbox_matching_criteria may indicate that the matching list is found based on Cartesian coordinates, and for the Cartesian coordinates, it may indicate the parameter forming the basis for matching. Among the values of the mode, 0 may mean that the comparison is performed based on the x-axis, 1 may mean that the comparison is performed based on the y-axis, 2 may mean that the comparison is performed based on a single axis, the z-axis, and 3, 4, and 5 may mean that the comparison is performed based on two of the three axes, such as x and y axes, y and z axes, and x and z axes, 6 and 7 may mean that the comparison is performed based on distance to consider all three axes, where 6 may mean that the comparison is performed based on the Euclidean distance, and 7 may mean that the comparison is performed based on the Mahattan distance.

The geometry slice header may be referred to as a geometry data unit header.

The geometry data unit header may further contain the following information.

gdu_geometry_parameter_set_id specifies the active GPS with gps_geom_parameter_set_id.

slice_id identifies the slice to be referenced by other DUs.

slice_tag identifies a slice as a member of a group of slices that have the same value for slice_tag. When a tile inventory DU is present, the slice group is a tile identified by the tile ID. When the tile inventory DU is not present, the interpretation of slice_tag depends on the application.

frame_ctr_lsb specifies the LSB of frame_ctr_lsb_bits of the notional frame counter FrameCtr.

slice _entropy_continuation equal to 1 indicates that the entropy syntax analysis state restoration process shall be applied at the start of the GDU and all ADUs of the slice. slice_entropy_continuation equal to 0 specifies that the syntax analysis of the GDU and all ADUs of the slice is independent of that of the other slices. When not present, slice_entropy_continuation is inferred to be 0.

When the GDU is the first GDU in the coded point cloud frame, it is a requirement of bitstream conformance that slice_entropy_continuation should be equal to 0. The decoder shall ignore (remove from the bitstream and discard) any slice in a coded point cloud frame with slice_entropy_continuation equal to 1 that is not preceded by a slice with slice_entropy_continuation equal to 0 in the same frame.

The prev_slice_id should be the same as the GDU slice_id of the previous slice in the bitstream order. The decoder shall ignore (remove from the bitstream and discard) slices that have prev_slice_id which are not equal to the slice_id of the previous slice in the same frame.

When slice_tag is not equal to the slice_tag of the GDU identified by prev_slice_id, it is recommended that slice_entropy_continuation be 0. For example, when the slice_tag is used to select a subset of slices, decoding may be prevented if there is a dependency on an unselected slice.

slice_geom_origin_bits_minus1 + 1 specifies the length in bits of each syntax element slice_geom_origin_xyz.

slice_geom_origin_xyz[ k ] and slice_geom_origin_log2_scale specify the k-th XYZ coordinate of the slice origin in the coding coordinate system. The slice origin in STV coordinates is specified by the expression SliceOrigin[]. When not present, slice_geom_origin_log2_scale is inferred to be gps_geom_origin_log2_scale.

slice_angular_origin_bits_minus1 + 1 specifies the length in bits of each syntax element slice_angular_origin_xyz.

slice_angular_origin_xyz[k] specifies the k-th XYZ coordinate of the relative angular origin in the coordinate system of the slice. When not present, slice_angular_origin_xyz[k] shall be inferred to be 0.

The slice angular origin of the STV coordinates is specified by the expression AngularOrigin[k].

slice_geom_qp_offset specifies the slice geometry QP as an offset to the GPS geom_qp. When not present, slice_geom_qp_offset is inferred to be 0.

Geometry Data Unit Footer Semantics

The start of the GDU footer is determined at the end of the GDU as specified in 11.2.4.

slice_num_points_minus1 + 1 indicates the number of coded points in the DU. It is a requirement of bitstream conformance that slice_num_points_minus1 + 1 be equal to the number of decodable points in the DU.

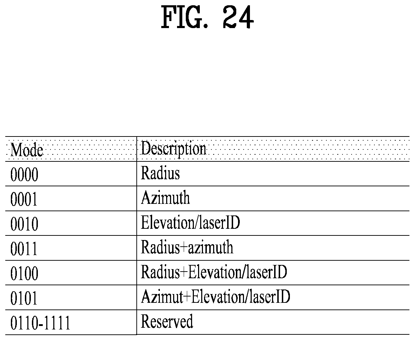

FIG. 24 shows matching criteria according to embodiments.

Matching criteria modes associated with gsh_compact_bbox_matching_criteria_sph described in FIG. 23 are shown in FIG. 24.

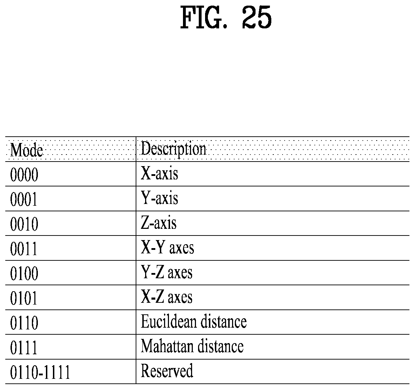

FIG. 25 shows matching criteria according to embodiments.

Matching criteria modes associated with gsh_compact bbox_matching_criteria described in FIG. 23 are shown in FIG. 25.

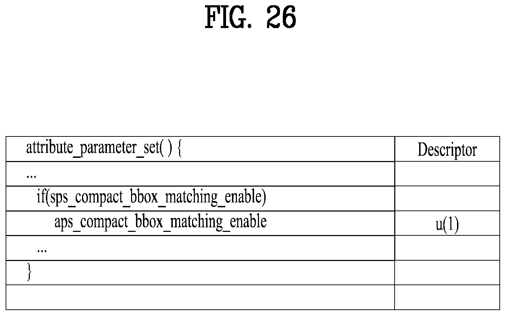

FIG. 26 shows an attribute parameter set (APS) according to embodiments.

FIG. 26 shows the attribute parameter set contained in the bitstream of FIG. 18.

The attribute parameter set may further contain information for configuring object compact bounding box matching.

aps_compact_bbox_matching_enable: When sps_compact_bbox_matching_enable is TRUE, aps_compact_bbox_matching_enable may signal whether prediction per box that defines an object region is performed in attribute coding. Whether to inherit this information in attribute coding may be siganled. When aps_compact bbox matching_enable is TRUE, it may mean that the matching list of object compact bounding boxes is inherited for attribute coding. When it is FALSE, it may mean that attributes are coded using the conventional method.

The attribute parameter set may further contain the following information.

aps_attr_parameter_set_id identifies the APS to be referenced by other DUs.

aps_seq_parameter_set_id identifies the active SPS based on sps_seq_parameter_set_id.

attr_coding_type specifies an attribute coding method.

attr_primary_qp_minus4 + 4 specifies the QP for the primary attribute component before adding the per-slice, per-region, and per-transformation-level offsets.

attr_secondary_qp_offset specifies the offset to be applied to the primary attribute QP to derive the QP for the secondary attribute component.

attr_qp_offsets_present specifies whether the per-slice attribute QP offset, attr_qp_offset[k], is present (when equal to 1) or not (when equal to 0) in the ADU header.

attr_coord_conv_enabled specifies whether to use attribute coding uses scaled angular coordinates (when equal to 1) or slice-related STV point positions (when equal to 0). It is a requirement of bitstream conformance that attr_coord_conv_enabled be equal to 0 when geom_angular_enabled is equal to 0.

attr_coord_conv_scale_bits_minus1[k] + 1 specifies the bit length of the syntax element attr_coord_conv_scale[k].

attr_coord_conv_scale[k] specifies the scale factor used to scale the k-th angular coordinate of a point for attribute coding. The scale factor is in units of $2^{(-8)}$.

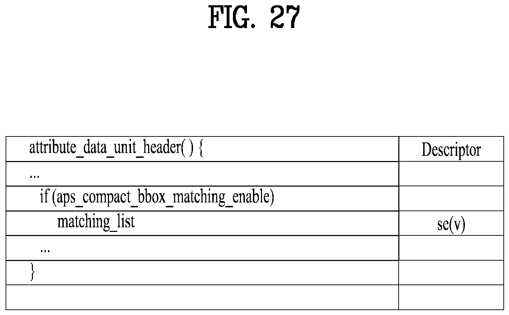

FIG. 27 shows an attribute data unit header according to embodiments.

FIG. 27 shows the attribute data unit header (attribute slice header) contained in the bitstream of FIG. 18.

The attribute data unit header may contain information for configuring object compact bounding box matching.

matching_list: When aps_compact_bbox_matching_enable is TRUE, a matching list may be inherited from the result of geometry coding and a compact bounding box list may be stored in the attribute data unit header for use in attribute coding.

The attribute data unit header may further contain the following information.

adu_attr_parameter_set_id specifies the active APS with aps_attr_parameter_set_id.

adu_reserved_zero_3bits is equal to 0 in bitstreams that conform to this version of this document.

adu_sps_attr_idx identifies the attribute coded as an index for the active SPS attribute list.

At the start of every ADU, the variable AttrIdx is set to adu_sps_attr_idx.

The attributes coded by the ADU have up to three components unless attr_coding_type is equal to 3.

adu_slice_id specifies the value of the previous GDU slice_id.

defattr_seq_parameter_set_id specifies the active SPS with sps_seq_parameter_set_id.

defattr_sps_attr_idx identifies the attribute coded as an index for the active SPS attribute list.

The variable AttrIdx is set to defattr_sps_attr_idx at the start of every basic attribute data unit.

defattr_slice_id specifies the value of the previous GDU slice_id.

defattr_value[$c$] specifies the value of the $c$-th attribute component for all points in the slice. The length in bits of defattr_value[$c$] is AttrBitDepth.

FIG. 28 illustrates a point cloud data transmission device according to embodiments.

The point cloud data transmission method/device according to the embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, the encoding of FIG. 36, and the transmission method of FIG. 38) may be configured as a transmission device as shown in FIG. 28. Each component in FIG. 28 may correspond to software, hardware, a processor, and/or a combination thereof.

The transmission device according to the embodiments may be referred to as a point cloud encoder according to embodiments, may be referred to as a device including an encoder and a transmitter, or may be referred to as a device including a memory and a processor.

The transmitter first receives point cloud data as input data separates the point into position (or geometry) and attribute values, and performs coordinate transformation into a codable form. If the frame is for intra prediction, the intra prediction method (see FIGS. 1 to 14) is applied and entropy coding is performed to generate a bitstream. If the frame is not for intra prediction, it is checked whether to use a compact bounding box matching list for prediction. If the compact bounding box matching list is not used, inter prediction is performed. If the compact bounding box matching list is used, it is checked whether to perform matching after transformation to spherical coordinates. If spherical coordinates are used, a matching list is generated after the transformation. Otherwise, Cartesian coordinates may be used and sorted by a predefined criterion. Then, a matching list may be generated. The generated list may be used in performing block-by-block prediction during inter-prediction. After the inter-prediction is completed, entropy coding may be performed, and then an output bitstream may be generated.

Referring to FIG. 28, the transmission device or encoder according to the embodiments may include a predicator and an entropy coder. The predicator may perform a prediction on the point cloud data, and the entropy coder may code the point cloud data encoded by the prediction based on an entropy method to output a bitstream (FIG. 18).

The device according to the embodiments receives point cloud data containing geometry and attributes as input data. The input data may include parameters related to encoding of the point cloud data. The parameters may be information configured in the encoder system. It is determined whether the mode is intra-frame prediction or not. When the mode is intra-frame prediction, the point cloud data may be predicted based on the intra-frames, and a residual between the current point cloud data and the predicted data may be generated based on the predicted data, thereby reducing the size of the bitstream to be encoded. The prediction may be applied to at least one of the geometry encoding and attribute encoding of the point cloud data, or to both the geometry and attributes.

When the mode is not intra-frame prediction, i.e., when the mode is the inter-frame prediction mode, the point cloud data contained in the current frame may be predicted based on a reference frame according to FIGS. 15 to 17. The device according to the embodiments checks _compact_bbox_matching_enable (see FIGS. 18 to 26). When _compact_bbox_matching_enable is FALSE, inter-prediction is performed (see FIG. 15, etc.). When _compact_bbox_matching_enable is TRUE, it is checked whether compact_bbox_matching_criteria_sph is TRUE or FALSE. When compact_bbox_matching_criteria_sph is TRUE, the coordinates may be transformed. The Cartesian coordinates may be transformed to spherical coordinates, and the next procedure may be performed based on the spherical coordinates. When compact_bbox_matching_criteria_sph is FALSE, the next procedure may be performed based on the Cartesian coordinates. The device according to the embodiments may generate a matching box list (see FIG. 17). Based on the matching box list, inter-prediction may be performed. The procedure for generating a compact bounding box, generating a matching box list, and performing inter-prediction is described above with reference to FIGS. 15 to 17.

FIG. 29 illustrates a point cloud data reception device according to embodiments.

The point cloud data reception method/device according to the embodiments (the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the reception method of FIG. 39) may be configured as a reception device as shown in FIG. 29. Each component of FIG. 29 may correspond to software, hardware, a processor, and/or a combination thereof.

The reception device according to the embodiments may be referred to as a point cloud decoder according to the embodiments, may be referred to as a device including a receiver and a decoder, or may be referred to as a device including a memory and a processor. The reception device of FIG. 29 may correspond to the transmission device of FIG. 28, and may perform operations corresponding to the transmission operations and/or the reverse process thereto.

The receiver performs entropy decoding, dequantization, and inverse transformation on the geometry and attribute bitstreams transmitted by the transmitter. Then, for a slice/frame unit, if the corresponding frame is an intra prediction frame, the receiver performs intra frame prediction (see FIGS. 1 to 14) to reconstruct the point cloud. If the frame is not an intra prediction frame, the receiver checks whether the prediction has been performed based on a compact bounding box matching list. If so, the receiver performs inter-prediction on a block-by-block basis using the matching compact bounding boxes, and stores the non-matching compact bounding boxes for use in prediction of the next frame. Inter-prediction may be performed on points that are outside the compact bounding box for inter-frame prediction. In the case where the compact bounding box matching list is not used, inter prediction (see FIG. 15, etc.) may be performed. After the inter prediction, reconstruction may be performed, and then the points may be used for attribute coding and rendering.

Referring to FIG. 29, the reception device or decoder according to the embodiments may include a predictor and a reconstructor. The predictor may perform a prediction on the point cloud data, and the reconstructor may reconstruct the point cloud data based on the predicted data.

The reception device according to the embodiments may receive the bitstream of FIG. 18. The device may decode the bitstream based on an entropy method. The device according to the embodiments may determine a mode for performing prediction. When the mode is an intra prediction mode, intra frame prediction may be performed (see FIGS. 1 to 14, etc.). The point cloud data may be reconstructed by summing the predicted point cloud data and the received residual value. When the mode is not the intra-prediction mode, i.e., when the mode is the inter-prediction mode, the device according to the embodiments may check the compact bounding box enable information. When the enable information is FALSE, inter-prediction is performed. When the enable information is TRUE, a matching box list is generated. Based on the generated list of matching boxes, inter-prediction may be performed (see FIGS. 15 to 17, etc.) and point cloud data may be reconstructed.

Embodiments include a method including analyzing a relationship between points within a frame, defining compact bounding boxes capable of representing regions on an object-by-object basis to match the regions on a block-by-block basis when core points are a meaningful set of points, configuring a compact bounding box list, and connecting regions/blocks by matching similar regions in the corresponding compact bounding box list during inter-prediction. By performing frame prediction between regions, rather than simple sampling or stereotyped segmentation, local motion estimation may be accomplished. This may lead to higher accuracy, reducing residuals, and enabling prediction on a point set basis rather than a point-by-point basis. Therefore, encoding/decoding time may be reduced.

Operations according to the embodiments described in the present discosure may be performed by a transmission/reception device including a memory and/or a processor according to embodiments. The memory may store programs for processing/controlling the operations according to the embodiments, and the processor may control various operations described in the present discosure. The processor may be referred to as a controller or the like. In embodiments, operations may be performed by firmware, software, and/or a combination thereof. The firmware, software, and/or a combination thereof may be stored in the processor or the memory.

The method/device according to the embodiments may include and perform classification of static objects and dynamic objects for inter prediction of point cloud content, and a method for motion estimation of dynamic objects.

As a method for increasing compression efficiency of point cloud data having one or more frames, the method/device according to the embodiments may include a method of selecting dynamic objects in a frame for predicting a position relationship of each node from predictive tree geometry with an inter-frame prediction technique, and performing motion estimation and compensation by inter-frame connecting the dynamic objects.

To efficiently perform inter-frame prediction of the predictive geometry, the method/device according to the embodiments may include a method of separating a dynamic region from a static region based on position information about a compact bounding box that may define a predictive object, and performing estimation and compensation on the separated motion.

The method/device according to the embodiments may perform motion estimation and compensation based on a position difference between minimal regions matched on an object-by-object basis. Dynamic and static regions may be separated based on the degree of motion. For each object classified as a dynamic region, a different motion vector may be found and applied. For objects classified as a static region, a single motion vector may be found and applied.

FIG. 30 illustrates a method of classifying static and dynamic objects for an object compact bounding box according to embodiments.

Following FIGS. 15 and 16, a method/device according to embodiments may include and perform a method of classifying static and dynamic objects in object compact bounding boxes connected between frames.

Based on a difference in azimuth, radius, or laserID from a threshold between the connected boxes according to criteria used to connect the object boxes, a box having a value between a first threshold (threshold 1) and a second threshold (threshold 2), or greater than a single threshold may be classified as a dynamic object.

Referring to FIGS. 16 and 30, a top view shows only boxes whose azimuth difference is positioned between threshold 1 and threshold 2 among the matched object compact bounding boxes. The points in region 3000 may represent the point cloud of the reference frame, and the points in region 3001 may represent the point cloud of the current frame. When a box is classified as a dynamic box when the difference in the azimuth of the Max position of the box is positioned between two thresholds, an object classified as a dynamic object in the reference frame may be separated from the matching object box list (see FIG. 17, etc.).

When only the separated dynamic objects in the reference frame are marked, the points marked 3002 as shown in FIG. 30 may represent the region of each corresponding object. The remaining objects that are not classified as dynamic objects may be classified as static objects to allow for motion estimation and compensation in a different manner than for the dynamic objects.

Referring to FIG. 30, a top view of points and bounding boxes containing the points is shown. The method/device according to the embodiments may match object compact bounding boxes, as described above, and classify dynamic objects and static objects based on whether a specific reference, e.g., a difference in azimuth, radius, or laser ID between the matched or connected boxes is within a specific range or meets a specific criterion. FIG. 30 is an example of a top view of the points in the reference frame and the current frame, showing the distribution of the points in the reference/current frame marked 3000 and 30001. Once a dynamic object box is determined among the points, the object classified as a dynamic object in the reference frame may be separated from the matching object box list. When separated, only the dynamic object in the reference frame remains, and motion estimation and compensation may be performed for the current frame based on the points classified as the dynamic object. Based on the points classified as static objects in the reference frame, motion estimation and compensation may be performed for the current frame. Since the characteristics of dynamic objects are different from those of static objects, motion estimation and compensation may be performed more accurately by classifying the objects according to different criteria.

FIG. 31 illustrates a reference bounding box in a reference frame and a current bounding box in a current frame according to embodiments.

As shown in FIG. 30, dynamic boxes and static boxes may be classified among object compact bounding boxes connected between frames, and bounding boxes for dynamic boxes may be represented in the reference frame and the current frame.

The method/device according to the embodiments may predict the motion of a dynamic object among the object compact bounding boxes connected between frames.

An object separated as a dynamic object may have a motion independent of the motion of other objects. Different motion estimation and compensation may be performed for each dynamic object.

The difference between the eight vertex positions that may define the compact bounding box of each dynamice object in the reference frame and the object compact bounding box in the current frame connected to the dynamice object, and the middle value of one box, i.e. the difference between the positions of the nine points in total, is taken as candidate motion vectors. When each of the eight motion vectors is applied to the dynamic object in the reference frame, the value that may minimizes the difference from the points contained in the connected object bounding box (object Bbox) in the current frame may be taken as the motion vector.

The bounding boxes (bboxes) of the dynamic object found in the reference frame and the current frame as shown in FIG. 31 may be referred to as a reference bounding box (refBbox) and a current bounding box (currBbox), respectively. A combination of the coordinate information about the Min and Max positions of each box may be used to determine a reference value for finding a motion vector candidate.

The difference between the positions may be a candidate value for determining the motion vector as follows.

$$MV\_candidate=(P\_(ref,candidate)-P\_(curr,candidate))$$

After applying the motion vector candidate MVcandidate to the points corresponding to the dynamic object in the reference frame, the MVcandidate that results in the smallest sum of differences from all combinations of points contained in the matching bbox in the current frame may be selected as the motion vector.

The method/device according to the embodiments may predict a motion of a static object in object compact bounding boxes connected between frames.

All points in the object bboxes other than the object bboxes classified as dynamic objects are classified as static objects, and the remaining boxes except the object bboxes matching the dynamic objects in the current frame may be subject to motion estimation of the static objects.

In order to ensure that the same motion vector is applied to all points classified as static objects, a motion vector that yields the smallest difference from the points matched to static objects in the current frame when a 3x3 matrix reflecting rotation, translation, and scaling is applied to the points of the static objects in the reference frame may be found using the least mean square (LMS) or robust fitting.

Referring to FIG. 18, in an embodiment of the present disclosure, a compact bounding box for defining an object is defined for each frame. Components for matching the object compact bounding boxes between frames and for classifying the objects into dynamic objects and static objects for different motion vector compensation may be defined. The sequence parameter set in the bitstream signals that the objects have been separated into dynamic/static objects for inter-prediction and motion compensation has been performed. The GPS in the bitstream carries initial parameters for connecting the object compact bounding boxes. The geometry slice unit in the bitstream may signal detailed information for connecting the object compact bounding boxes, as well as the box position information about the dynamic objects and the motion vector of each dynamic object.

While the information has been described in terms of its use in geometry, the information may be shared for attribute coding, and the position of the signaling may be added to a higher/lower level syntax structure depending on the purpose.

Related information may be signaled to add/perform embodiments. Hereinafter, parameters (which may be referred to as metadata, signaling information, etc.) according to embodiments may be generated in a process of a transmitter according to embodiments described below, and delivered to a receiver according to embodiments for use in a reconstruction process. For example, the parameters according to the embodiments may be generated in a metadata processor (or metadata generator) of the transmission device according to the embodiments described below and acquired by a metadata parser of the reception device according to the embodiments described below. The configuration of the encoded point cloud and the syntax of parameters will be described with reference to each figure.

FIG. 32 shows a syntax of an SPS according to embodiments.

FIG. 32 corresponds to the SPS of FIG. 19, and the fields described in FIGS. 19 and 32 may be included in the SPS of the bitstream of FIG. 18.

The SPS may include information for classifying a dynamic/static object for motion vector estimation.

sps_dynamic_obj_enable: May indicate, when inter-prediction is applied to the sequence, that separate motion vector estimation/compensation has been applied to the dynamic objects. When sps_dynamic_obj_enable is TRUE, it may indicate that motion vector compensation has been performed for each dynamic object region. When it is FALSE, it may indicate that prediction has been performed using the conventional method of performing motion compensation without dynamic objects.

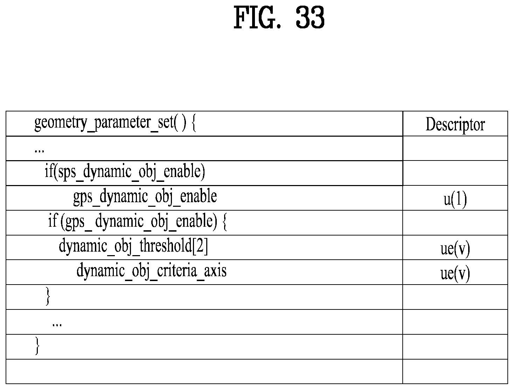

FIG. 33 shows a syntax of a GPS according to embodiments.

FIG. 33 corresponds to the GPS of FIG. 20. The information in FIGS. 20 and 33 may be included in a GPS in a bitstream.

The GPS may include information for motion vector estimation by classifying the dynamic/static objects.

gps_dynamic_obj_enable: May signal, when sps_dynamic_obj_enable in the SPS is TRUE, that motion vector compensation has been performed on a dynamic object-by-dynamic object basis during geometry coding on a frame-by-frame basis. The acquired unit of cloud data may be a sequence, and the sequence may include one or more frames. The encoder and decoder may encode and decode the point cloud data in data units or slices of a frame. When the sps_dynamic_obj_enable information is omitted at the SPS level, gps_dynamic_obj_enable may operate independently. It may be applied when motion vector compensation is needed on a per dynamic object basis, regardless of the geometry coding method. When gps_dynamic_obj_enable is TRUE, it may mean that the prediction/compensation has been performed per dynamic object region. When it is FALSE, it may mean that the prediction has been performed using the conventional method of performing motion compensation without dynamic objects.

dynamic_obj_threshold[2]: May signal a threshold for separating dynamic objects. One or two threshold values may be signaled. When a single threshold is signaled, an object is classified as a dynamic object if a reference value for classification of a dynamic object is greater than the threshold. When two thresholds are signaled, an object may be separated as a dynamic object if the reference value for classification of a dynamic object is greater than a first threshold (threshold[1]) and less than a second threshold (threshold[2]).

dynamic_obj_criteria_axis: May signal the axis information that is used as a criterion in separating a dynamic object. When the coordinate information representing an object box is Cartesian coordinates, the values of the x, y, and z axes are signaled as mode 0, 0, and 2 (or mode 0, 1, and 2), respectively; when the coordinate information is spherical coordinates, the values of the radius, azimuth, and laserID (or elevation) axes may be signaled as mode 0, 1, and 2, respectively.

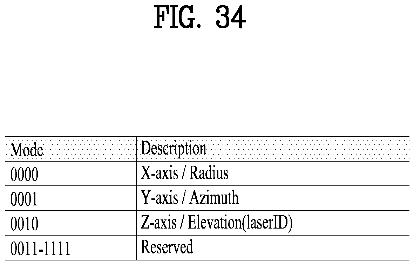

FIG. 34 shows modes of criteria for dynamic objects according to embodiments.

As a continuation of FIG. 33, as shown in FIG. 34, the mode set to a first value may indicate X-axis ( Cartesian)/radius (spherical), the mode set to a second value may indicate Y-axis ( Cartesian)/azimuth (spherical), and the mode set to a third value may indicate Z-axis ( Cartesian)/elevation (laser ID) (spherical). A fourth value may be used to indicate a reserved value.

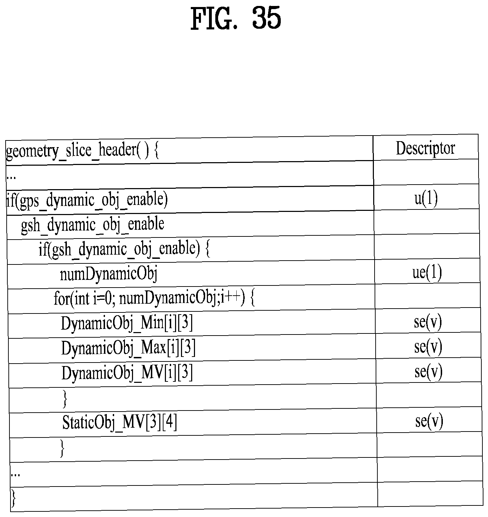

FIG. 35 shows a syntax of a geometry slice header according to embodiments.

FIG. 35 corresponds to the geometry slice header of FIG. 23, and the geometry slice headers of FIGS. 23 and 35 may be included in the bitstream of FIG. 18.

The geometry slice header may add information for performing motion vector estimation by classifying dynamic/static objects.

When gsh_dynamic_obj_enable is TRUE, it may mean that the prediction/compensation has been performed per dynamic object region. When it is FALSE, it may mean that the prediction has been performed using the conventional method of performing motion compensation without dynamic objects (see FIG. 15 for the conventional method in this document).

numDynamicObj: May signal the total number of dynamic objects when gsh_dynamic_obj_enable is TRUE.

DynamicObj _Min[i][3]: May signal the min position of the dynamic object compact bounding box for each dynamic object. It may signal as many positions as numDynamicObj.

DynamicObj _Max[i][3]: May signal the max position of the dynamic object compact bounding box for each dynamic object. It may signal as many positions as numDynamicObj.

DynamicObj_MV[i][3]: May signal a motion vector for each dynamic object. It may signal as many vectors as numDynamicObj.

StaticObj_MV[3][4]: May signal a motion vector for motion compensation of static objects and may have a 3x4 matrix structure.

FIG. 36 illustrates a point cloud data transmission device according to embodiments.

The transmission device of FIG. 36 corresponds to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, the transmission method of FIG. 38, and the like. Each component of FIG. 36 may correspond to hardware, software, a processor, and/or a combination thereof.

The transmission device according to the embodiments may correspond to a point cloud data encoder. The transmission device may include a processor configured to perform the operations in the block diagram of FIG. 36 and a memory configured to store related information. The transmission device may include an encoder configured to perform the operations in the block diagram of FIG. 36 and a transmitter configured to transmit an encoded bitstream. The transmission device according to the embodiments may execute the flowchart of FIG. 36.

The structure of the transmission device according to the embodiments may have the structure of the point cloud encoder according to the embodiments. The point cloud encoder for processing point cloud compression may be specifically represented as shown in FIG. 39.

The transmitter first receives point cloud data as input data separates the point into position (or geometry) and attribute values, and performs coordinate transformation into a codable form. If the frame is for intra prediction, the intra prediction method is applied and entropy coding is performed to generate a bitstream. If the frame is not for intra prediction, it is checked whether to separate the dynamic/static objects to perform motion estimation. If the dynamic/static objects are not separated, inter-prediction is performed without separation. When the dynamic/static objects are separated for motion vector estimation/compensation, a matched list is obtained by matching the object compact bounding boxes between the current frame and the reference frame, and the matched objects are separated into dynamic/static objects based on a signaled reference value. Motion vector estimation may be performed for each point group belonging to each separated static object and each separated dynamic object, which may be utilized for inter-prediction. After the inter-prediction is completed, entropy coding is performed and an output bitstream is generated.

Referring to FIG. 36, the encoder receives point cloud data as input. It checks whether the mode for encoding the point cloud data is intra-prediction or not. When the mode is intra-prediction, intra-frame prediction is performed and entropy coding is performed. Then a bitstream is generated. When the mode is not intra-prediction, it is checked whether the dynamic object enable information is TRUE or FALSE. If the dynamic object enable is FALSE, a bitstream is generated by entropy coding after inter-prediction. If the dynamic object enable is TRUE, object compact bounding boxes are found, and box-to-box matching is performed (see FIGS. 16 and 17, etc.). Among the generated and matched object compact bounding boxes, dynamic and static objects may be classified (see FIGS. 30, 31, etc.). When the object is a static object, motion estimation according to the static object is performed. When the object is a dynamic object, motion estimation according to the dynamic object is performed as described above. Compensation is performed based on the estimated motion and inter-prediction is performed. Then, a bitstream is output after entropy coding.

FIG. 37 illustrates a point cloud data reception device according to embodiments.

The reception device of FIG. 37 may correspond to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the reception method of FIG. 39, and the like. Each component of FIG. 37 may correspond to hardware, software, a processor, and/or a combination thereof.

The reception device according to the embodiments may correspond to a point cloud data decoder. The reception device may include a processor configured to perform the operations in the block diagram of FIG. 37 and a memory configured to store related information. The reception device may include a decoder configured to perform the operations in the block diagram of FIG. 37 and a receiver configured to receive an encoded bitstream. The reception device according to the embodiments may execute the flowchart of FIG. 37.

The operations of the reception device in FIG. 37 correspond to the operations of the transmission device in FIG. 36, and may be a reverse process.

The receiver performs entropy decoding, dequantization, and inverse transformation on the geometry and attribute bitstreams transmitted by the transmitter. Then, for a slice/frame unit, if the corresponding frame is an intra prediction frame, the receiver performs intra frame prediction to reconstruct the point cloud. If the frame is not an intra prediction frame, the receiver separates the objects into dynamic/static objects and checks whether the motion estimation has been performed. If so, the signaled dynamic object and static point cloud may be separated, and motion vector compensation may be performed on each of the objects. Then, inter-prediction may be performed for inter-frame prediction. If a dynamic/static object motion estimation method is not used, inter-prediction may be performed. After the inter-prediction, the point may be reconstructed to perform attribute coding and rendering.

Referring to FIG. 37, the reception device receives the bitstream of FIG. 18. The reception device decodes the point cloud data based on the parameters contained in the bitstream. It decodes the point cloud data using a prediction method. It is checked whether the prediction is intra-prediction through a parameter. If it is intra-prediction, dynamic object enable information is checked through a parameter. When the dynamic object enable is FALSE, inter-prediction is performed without distinguishing dynamic objects. When the dynamic object enable is TRUE, static and dynamic objects are classified among the bounding boxes, and the static objects are subject to motion estimation and compensation according to the static objects. The dynamic objects are subject to motion estimation and compensation according to the dynamic objects. For the motion estimation and compensation according to each object, refer to the description above. After the motion estimation and compensation, inter-prediction is performed. The inter-predicted point cloud data is reconstructed and the reconstructed points are output.

The method/device according to embodiments may analyze the relationship between points in a frame and, when core points constitute a meaningful set, separates the corresponding regions into dynamic and static regions according to the degree of motion after inter-frame matching, and may perform different motion estimation and compensation for each region. By avoiding increasing residuals due to the lack of a motion estimation method and applying a different motion vector for each region, residuals may be reduced and accuracy may be increased.

The process of the transmission/reception device according to the embodiments may be described in combination with point cloud compression processing.

Operations according to the embodiments described in the present discosure may be performed by a transmission/reception device including a memory and/or a processor according to embodiments. The memory may store programs for processing/controlling the operations according to the embodiments, and the processor may control various operations described in the present discosure. The processor may be referred to as a controller or the like. In embodiments, operations may be performed by firmware, software, and/or a combination thereof. The firmware, software, and/or a combination thereof may be stored in the processor or the memory.

FIG. 38 illustrates a point cloud data transmission method according to embodiments.

FIG. 38 may correspond to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, the encoding of FIG. 36, and the like.

S3800: A point cloud data transmission method according to embodiments may include encoding point cloud data.

The encoding operation according to the embodiments may include the encoding operations of the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, and the encoding of FIG. 36.

S3801: The point cloud data transmission method according to the embodiments may further include transmitting a bitstream containing the point cloud data.

The transmission operation according to the embodiments may include the bitstream transmission operations of the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 4, the transmission device of FIG. 12, the device of FIG. 14, the encoding of FIGS. 15 to 17, the bitstream generation of FIGS. 18 to 27, the encoding of FIGS. 28, the encoding of FIGS. 30 and 31, the bitstream and parameter generation of FIGS. 32 to 35, and the encoding of FIG. 36.

FIG. 39 illustrates a point cloud data reception method according to embodiments.

FIG. 39 may correspond to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the like.

S3900: The point cloud data reception method according to the embodiments may include receiving a bitstream containing point cloud data.

The reception operation according to the embodiments may include the bitstream reception operations of the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the like.

S3901: The point cloud data reception method according to the embodiments may further include decoding the point cloud data.

The decoding operation according to the embodiments may include decoding the point cloud data (geometry and attributes) based on parameters as performed by the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoding of FIGS. 15 to 17, the bitstream parsing of FIGS. 18 to 27, the decoding of FIG. 29, the decoding of FIGS. 30 and 31, the bitstream parsing of FIGS. 32 to 35, the decoding of FIG. 37, and the like.

Referring to FIG. 1, a point cloud data transmission method according to embodiments may include encoding point cloud data, and transmitting a bitstream containing the point cloud data.

Referring to FIG. 15, regarding a basic inter-frame structure, the encoding of the point cloud data may include predicting a current point in a current frame containing the point cloud data based on a point in a reference frame for the current frame, wherein the point in the reference frame may be searched for based on an azimuth and laser ID of a point processed prior to the current point.

Referring to FIG. 16, regarding the compact bounding boxes, the encoding of the point cloud data may include extracting objects from the current frame containing the point cloud data and the reference frame for the current frame, generating bounding boxes containing the objects, sorting the bounding boxes based on coordinate information related to the bounding boxes, and generating a list for the bounding boxes.

Referring to FIG. 17, regarding connecting the compact bounding boxes, the encoding of the point cloud data may include searching for bounding boxes having similar information to the bounding boxes included in a list for the current frame among the bounding boxes included in the list for the reference frame, generating a matching list including the found bounding boxes, and removing the found bounding boxes from the list for the reference frame.

Referring to FIGS. 18 to 27, regarding the compact bounding box related parameters, the bitstream may contain information indicating whether inter-prediction is performed based on the objects for the point cloud data, information indicating a reference point for the matching list, information indicating a matching criterion for the matching list, and information indicating the matching list.

Referring to FIGS. 30 and 31, regarding the classification of dynamic/static objects of the compact bounding boxes and the dynamic motion vectors, the encoding of the point cloud data may include classifying dynamic objects based on a difference in at least one of the azimuth, radius, or laser ID between matched bounding boxes from the list of bounding boxes for the reference frame and the list of bounding boxes for the current frame, and generating motion vectors for the dynamic objects based on a difference in coordinate values between the bounding boxes of the reference frame for the dynamic objects and the bounding boxes of the current frame connected to the dynamic objects.

Referring to FIGS. 18 to 35, regarding the dynamic/static object parameters, the bitstream may contain information indicating whether motion vectors are estimated and compensated based on the dynamic objects for the point cloud data, information indicating a threshold for the dynamic objects, information indicating an axis of coordinates for the dynamic objects, information indicating a number of the dynamic objects, information indicating positions of the dynamic objects, and information indicating a motion vector for static objects.

The point cloud data transmission method according to the embodiments may be performed by a transmission device. The point cloud data transmission device may include an encoder configured to encode point cloud data, and a transmitter configured to transmit a bitstream containing the point cloud data. The point cloud data transmission device may include a memory and a processor connected to the memory. The processor may encode the point cloud data and transmit the bitstream containing the point cloud data.

The transmission method may correspond to a reception method. The reception method may perform a reverse process to the transmission method. The point cloud data reception method may include receiving a bitstream containing point cloud data, and decoding the point cloud data.

Referring to FIG. 29, the decoding of the point cloud data may include predicting a current point in a current frame containing the point cloud data based on a point in a reference frame for the current frame, wherein the point in the reference frame may be searched for based on an azimuth and laser ID of a point processed prior to the current point.

Referring to FIG. 29, the decoding of the point cloud data may include extracting objects from the current frame containing the point cloud data and the reference frame for the current frame based on parameter information in the bitstream, and inter-predicting the point cloud data on a block-by-block basis based on bounding boxes containing the objects and a list for the bounding boxes.

The decoding of the point cloud data may include searching for bounding boxes having similar information to the bounding boxes included in a list for the current frame among the bounding boxes included in the list for the reference frame based on the parameter information in the bitstream and generating a matching list including the found bounding boxes, or inter-predicting the point cloud data based on information about the list of bounding boxes based on the parameter information in the bitstream.

The bitstream may contain information indicating whether inter-prediction is performed based on the objects for the point cloud data, information indicating a reference point for the matching list, information indicating a matching criterion for the matching list, and information indicating the matching list.

The decoding of the point cloud data may include classifying, based on the parameter information in the bitstream, dynamic objects based on a difference in at least one of the azimuth, radius, or laser ID between matched bounding boxes from the list of bounding boxes for the reference frame and the list of bounding boxes for the current frame, and generating motion vectors for the dynamic objects based on a difference in coordinate values between the bounding boxes of the reference frame for the dynamic objects and the bounding boxes of the current frame connected to the dynamic objects.

The point cloud data reception method may be performed by a reception device. The reception device may include a memory, and a processor connected to the memory. The processor may receive a bitstream containing point cloud data, and decode the point cloud data.

Accordingly, the methods/devices according to the embodiments may increase the performance of predictive geometry coding or predictive attribute coding. With compact bounding boxes, a relationship between points between frames may be analyzed, and regions containing meaningful points may be matched on a block-by-block basis. When performing inter-prediction, a compact bounding box list represented as a list of compact bounding boxes may be generated. The list may represent the matching relationship between similar regions between frames. With the information from the list of matched similar regions between frames, regions and/or block units may be connected between frames. Rather than simply sampling data or segmenting data in a structured form, embodiments may perform frame prediction between similar regions and predict local motions, thereby enabling accurate local motion estimation. As a result, prediction accuracy may be increased, thereby reducing the residual. Since points are not predicted on an individual point-by-point basis, but on a per-group of points, i.e., point set, basis, encoding and decoding times may be effectively reduced.

Also, by performing inter-frame matching on a per-region, which is a set of points, basis, and predicting whether a region is dynamic or static region based on the degree of motion, motion may be predicted and compensated according to the characteristics of each region. As a result, residuals may be reduced and accuracy may be increased.

In addition to storing in a mapping list the core points with radii that are processed first for each laser ID and quantized azimuth of the points in coding order during intra-prediction of the predictive geometry, embodiments may further separate the core information by region, and separate dynamic objects from static objects based on region information that is matched between regions across frames. As a result, local motion estimation may be performed on a block-by-block basis. Furthermore, rather than considering only the upper bound of the azimuth of the directly coded points as the target of the predicted value during intra-prediction of the predictive geometry, embodiments may search for a box representing a specific core region for each segmentation unit or for the entire frame after segmentation. A matching list may be configured based on highly relevant inter-frame box information. Dynamic and static objects may be separated, and local motion estimation may be performed on the dynamic objects on a block-by-block basis.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related contents have been described in the best mode for carrying out the embodiments.

[Industrial Applicability]

As described above, the embodiments may be fully or partially applied to the point cloud data transmission/reception device and system.

It will be apparent to those skilled in the art that various changes or modifications can be made to the embodiments within the scope of the embodiments.

Thus, it is intended that the embodiments cover the modifications and variations of this disclosure provided they come within the scope of the appended claims and their equivalents.

**Claims**

1.   A method of transmitting point cloud data, the method comprising:

    encoding point cloud data; and
    transmitting a bitstream containing the point cloud data.

2.   The method of claim 1, wherein the encoding of the point cloud data comprises:

    predicting a current point in a current frame containing the point cloud data based on a point in a reference frame for the current frame,
    wherein the point in the reference frame is searched for based on an azimuth and a laser ID of a point processed prior to the current point.

3.   The method of claim 1, wherein the encoding of the point cloud data comprises:

    extracting objects from a current frame containing the point cloud data and a reference frame for the current frame;
    generating bounding boxes containing the objects; and
    sorting the bounding boxes based on coordinate information related to the bounding boxes and generating a list for the bounding boxes.

4.   The method of claim 3, wherein the encoding of the point cloud data comprises:

    searching, among bounding boxes included in a list for the reference frame, for bounding boxes having similar information to bounding boxes included in a list for the current frame; and
    generating a matching list including the found bounding boxes,
    wherein the found bounding boxes are removed from the list for the reference frame.

5.   The method of claim 4, wherein the bitstream comprises:

    information indicating whether inter-prediction is performed on the point cloud data based on the objects;
    information indicating a reference point for the matching list;
    information indicating a matching criterion for the matching list; and
    information indicating the matching list.

6.   The method of claim 4, wherein the encoding of the point cloud data comprises:

    classifying dynamic objects based on a difference in at least one of azimuth, radius, or laser ID among the matched bounding boxes from among the bounding boxes included in the list for the reference frame and the bounding boxes included in the list for the current frame; and
    generating motion vector for the dynamic objects based on a difference in a coordinate value between bounding boxes in the reference frame for the dynamic objects and bounding boxes in the current frame connected to the dynamic objects.

7.   The method of claim 1, wherein the bitstream comprises:

    information indicating whether to estimate and compensate for motion vectors based on dynamic objects for the point cloud data;
information indicating a threshold for the dynamic objects;
information indicating axes of coordinates for the dynamic objects;
information indicating a number of the dynamic objects;
information indicating a position of the dynamic objects; and
information indicating a motion vector for static objects.

8. A device for transmitting point cloud data, the device comprising:

a memory; and
a processor connected to the memory,
wherein the processor is configured to:

encode point cloud data; and
transmit a bitstream containing the point cloud data.

9. A method of receiving point cloud data, the method comprising:

receiving a bitstream containing point cloud data; and
decoding the point cloud data.

10. The method of claim 9, wherein the decoding of the point cloud data comprises:

predicting a current point in a current frame containing the point cloud data based on a point in a reference frame for the current frame,
wherein the point in the reference frame is searched for based on an azimuth and a laser ID of a point processed prior to the current point.

11. The method of claim 9, wherein the decoding of the point cloud data comprises:

extracting objects from a current frame containing the point cloud data and a reference frame for the current frame based on parameter information in the bitstream; and
inter-predicting the point cloud data on a block-by-block basis based on bounding boxes containing the objects and a list for the bounding boxes.

12. The method of claim 11, wherein the decoding of the point cloud data comprises:

based on the parameter information in the bitstream, searching, among bounding boxes included in a list for the reference frame, for bounding boxes having similar information to bounding boxes included in a list for the current frame and generating a matching list including the found bounding boxes; or
inter-predicting the point cloud data based on information about a list of bounding boxes based on the parameter information in the bitstream.

13. The method of claim 11, wherein the bitstream comprises:

information indicating whether inter-prediction is performed on the point cloud data based on the objects;
information indicating a reference point for the matching list;
information indicating a matching criterion for the matching list; and
information indicating the matching list.

14. The method of claim 11 wherein the decoding of the point cloud data comprises:

classifying, based on the parameter information in the bitstream, dynamic objects based on a difference in at least one of azimuth, radius, or laser ID among the matched bounding boxes from among the bounding boxes included in the list for the reference frame and the bounding boxes included in the list for the current frame; and
generating motion vector for the dynamic objects based on a difference in a coordinate value between bounding boxes in the reference frame for the dynamic objects and bounding boxes in the current frame connected to the dynamic objects.

15. A device for receiving point cloud data, the device comprising:

a memory; and
a processor connected to the memory,
wherein the processor is configured to:

receive a bitstream containing point cloud data; and
decoding the point cloud data.

# FIG. 1

# FIG. 2

# FIG. 3

# FIG. 4

positions                                   attributes

| 38000 | Transform coordinates |

| 38006 | Transform colors |

| 38001 | Quantize and remove points (voxelize) |

| 38007 | Transfer attributes |

38008

| 38002 | Analyze octree |

Reconstruct geometry

| 38009 | Gnnerate LOD |

RAHT

| 40010 | Lifting |

| 38003 | Analyze surface approximation |

38005

| 40011 | Quantize coefficients |

| 38004 | Arithmetic encode |

| 40012 | Arithmetic encode |

geometry bitstream                          atribute bitstream

# FIG. 5

# FIG. 6

# FIG. 7

$$1 + 2 + 4 + 8 = 15$$

## FIG. 8

Level of details

# FIG. 9

| Original order | P0, P1, P2, P3, P4, P5, P6, P7, P8, P9 | | |
|---|---|---|---|
| LOD-based order | P0, P5, P4, P2 | P1, P6, P3 | P9, P8, P7 |

LOD0
LOD1
LOD2

# FIG. 10

# FIG. 11

# FIG. 12

# FIG. 13

13000 — Receiver

13001 — Reception processor

13006

Geometry bitstream

Attribute bitstream

Set value, etc.

13002 — Arithmetic decoder

Metadata parser

Arithmetic decoder — 13007

13003 — Occupancy code-based octree reconstruction processor

Inverse quantization processor — 13008

13004 — Surface model processor (triangle reconstruction, up-sampling, voxelization)

Prediction/lifting/RAHT inverse transform processor — 13009

13005 — Inverse quantization processor

Color inverse transform processor — 13010

Sharing reconstructed position|values

Renderer — 13011

# FIG. 14

# FIG. 15

Additional Inter Pred Point

Inter Pred Point

Curr Point

Prev Dec Point

Ref Point with same scaled
azimuth and laserID

Reference Frame

Current Frame

# FIG. 16

(a)

(b)

FIG. 17

| current frame | | | | Reference frame | | | | Matching list | | |
|---|---|---|---|---|---|---|---|---|---|---|
| Obj1 | Bbox_min | Bbox_max | | Obj1 | Bbox_min | Bbox_max | | Obj1 | Bbox_min | Bbox_max |
| ... | | | | ... | | | | Obj_n | (0,0,0) | (0,0,0) |
| Obj_n | Bbox_min | Bbox_max | | Obj_n | Bbox_min | Bbox_max | | ... | | |
| | | | | | | | | Obj_n | Bbox_min | Bbox_max |

# FIG. 18

slice 0

slice n

| SPS | GPS | $APS_0$ | $APS_1$ | TPS | $Geom_0^0$ | $Attr_0^0$ | $Geom_1^0$ | ... | $Geom_0^n$ | $Attr_0^n$ | $Geom_1^n$ |

Geom_slice_header | Geom_slice_data

Tile(0).tile_bounding_box_xyz0;
Tile(0).tile_bounding_box_whd;
........
Tile(n).tile_bounding_box_xyz0;
Tile(n).tile_bounding_box_whd;

geom_geom_parameter_set_id;
geom_tile_id;
geom_slice_id;
geomBoxOrigin;
geom_box_log2_scale;
geom_max_node_size_log2;
geom_num_points;

# FIG. 19

| seq_parameter_set_rbsp( ) { | Descriptor |
|---|---|
| ... | |
| if(inter_prediction_enable) | |
| sps_compact_bbox_matching_enable | u(1) |
| ... | |
| } | |

# FIG. 20

| geometry_parameter_set( ) { | Descriptor |
|---|---|
| ... | |
| if(sps_compact_bbox_matching_enable) | |
| gps_compact_bbox_matching_enable | u(1) |
| if(gps_compact_bbox_matching_enable){ | |
| gps_compact_bbox_matching_corrdinates | u(1) |
| Creteria_point | u(1) |
| numPUminus1 | ue(v) |
| if(gps_compact_bbox_matching_coordinates) | |
| gps_compact_bbox_matching_criteria_sph | ue(v) |
| elseif(!gps_compact_bbox_matching_coordinates) | |
| gps_compact_bbox_matching_criteria | ue(v) |
| } | |
| ... | |
| } | |
| | |

# FIG. 21

| Mode | Description |
| --- | --- |
| 0000 | Radius |
| 0001 | Azimuth |
| 0010 | Elevation/laserID |
| 0011 | Radius+azimuth |
| 0100 | Radius+Elevation/laserID |
| 0101 | Azimut+Elevation/laserID |
| 0110-1111 | Reserved |

# FIG. 22

| Mode | Description |
|---|---|
| 0000 | X-axis |
| 0001 | Y-axis |
| 0010 | Z-axis |
| 0011 | X-Y axes |
| 0100 | Y-Z axes |
| 0101 | X-Z axes |
| 0110 | Eucildean distance |
| 0111 | Mahattan distance |
| 0110-1111 | Reserved |

# FIG. 23

| geometry_slice_header( ) { | Descriptor |
|---|---|
| ... | |
| if(sps_compact_bbox_matching_enable) | u(1) |
| gsh_compact_bbox_matching_enable | |
| if(gsh_compact_bbox_matching_enable){ | |
| gsh_compact_bbox_matching_coordinates | u(1) |
| Creteria_point | u(1) |
| numPUminus1 | ue(v) |
| if(gsh_compact_bbox_matching_coordinates) | |
| gsh_compact_bbox_matching_criteria_sph | ue(v) |
| elseif(!gsh_compact_bbox_matching_coordinates) | |
| gsh_compact_bbox_matching_criteria | ue(v) |
| } | |
| ... | |
| } | |

# FIG. 24

| Mode | Description |
|------|-------------|
| 0000 | Radius |
| 0001 | Azimuth |
| 0010 | Elevation/laserID |
| 0011 | Radius+azimuth |
| 0100 | Radius+Elevation/laserID |
| 0101 | Azimut+Elevation/laserID |
| 0110-1111 | Reserved |

# FIG. 25

| Mode | Description |
|------|-------------|
| 0000 | X-axis |
| 0001 | Y-axis |
| 0010 | Z-axis |
| 0011 | X-Y axes |
| 0100 | Y-Z axes |
| 0101 | X-Z axes |
| 0110 | Eucildean distance |
| 0111 | Mahattan distance |
| 0110-1111 | Reserved |

# FIG. 26

| attribute_parameter_set( ) { | Descriptor |
|---|---|
| ... | |
| if(sps_compact_bbox_matching_enable) | |
| aps_compact_bbox_matching_enable | u(1) |
| ... | |
| } | |
| | |

# FIG. 27

| attribute_data_unit_header( ) { | Descriptor |
|---|---|
| ... | |
|   if (aps_compact_bbox_matching_enable) | |
|    matching_list | se(v) |
|  ... | |
| } | |
| | |

FIG. 28

FIG. 29

# FIG. 30

(a)

(b)

3000    3001

3003

3002

# FIG. 31

$(X_{r,min}, Y_{r,max}, Z_{r,max})$  refBbox_max$(X_{r,max}, Y_{r,max}, Z_{r,max})$

$(X_{r,min}, Y_{r,min}, Z_{r,max})$

$(X_{r,max}, Y_{r,min}, Z_{r,max})$

refBbox_center
$(X_{r,center}, Y_{r,center}, Z_{r,center})$

$(X_{r,min}, Y_{r,max}, Z_{r,min})$

$(X_{r,max}, Y_{r,max}, Z_{r,min})$

refBbox_min $(X_{r,min}, Y_{r,min}, Z_{r,min})$

$(X_{r,max}, Y_{r,min}, Z_{r,min})$

(a)

$(X_{c,min}, Y_{c,max}, Z_{c,max})$  currBbox_max$(X_{c,max}, Y_{c,max}, Z_{c,max})$

$(X_{c,min}, Y_{c,min}, Z_{c,max})$

$(X_{c,max}, Y_{c,min}, Z_{c,max})$

currBbox_center
$(X_{c,center}, Y_{c,center}, Z_{c,center})$

$(X_{c,min}, Y_{c,max}, Z_{c,min})$

$(X_{c,max}, Y_{c,max}, Z_{c,min})$

currBbox_min $(X_{c,min}, Y_{c,min}, Z_{c,min})$

$(X_{c,max}, Y_{c,min}, Z_{c,min})$

(b)

# FIG. 32

| seq_parameter_set_rbsp( ) { | Descriptor |
|---|---|
| ... | |
| if(inter_prediction_enable) | |
| sps_dynamic_obj_enable | u(1) |
| ... | |
| } | |

# FIG. 33

| geometry_parameter_set( ) { | Descriptor |
|---|---|
| ... | |
| if(sps_dynamic_obj_enable) | |
| gps_dynamic_obj_enable | u(1) |
| if (gps_ dynamic_obj_enable) { | |
| dynamic_obj_threshold[2] | ue(v) |
| dynamic_obj_criteria_axis | ue(v) |
| } | |
| ... | |
| } | |
| | |

# FIG. 34

| Mode | Description |
|------|-------------|
| 0000 | X-axis / Radius |
| 0001 | Y-axis / Azimuth |
| 0010 | Z-axis / Elevation(laserID) |
| 0011-1111 | Reserved |

# FIG. 35

| geometry_slice_header( ) { | Descriptor |
|---|---|
| ... | |
| if(gps_dynamic_obj_enable) | u(1) |
|   gsh_dynamic_obj_enable | |
|     if(gsh_dynamic_obj_enable) { | |
|       numDynamicObj | ue(1) |
|       for(int i=0; numDynamicObj;i++) { | |
|         DynamicObj_Min[i][3] | se(v) |
|         DynamicObj_Max[i][3] | se(v) |
|         DynamicObj_MV[i][3] | se(v) |
|       } | |
|       StaticObj_MV[3][4] | se(v) |
|     } | |
| ... | |
| } | |

# FIG. 36

Intput data → ◇ isIntra? → N → ◇ Dynamic_obj_enable → Y → Search Obj Compact bounding box / matching

Search Obj Compact bounding box / matching → Dynamic/static object classification

Dynamic/static object classification → Static object motion estimation | Dynamic object motion estimation

isIntra? → Y → Intra frame prediction

Dynamic_obj_enable → N → Inter prediction

Static object motion estimation → Inter prediction

Dynamic object motion estimation → Inter prediction

Inter prediction → Intra frame prediction → Entropy coding → Output bitstream

FIG. 37

# FIG. 38

| Encode point cloud data | ∼ S3800 |
| --- | --- |

| Transmit bitstream containing point cloud data | ∼ S3801 |
| --- | --- |

# FIG. 39

| Receive bitstream containing point cloud data | ~ S3900 |
| Decode point cloud data | ~ S3901 |

## INTERNATIONAL SEARCH REPORT

| International application No. |
| --- |
| **PCT/KR2022/021036** |

**A.    CLASSIFICATION OF SUBJECT MATTER**

**H04N 19/54**(2014.01)i; **H04N 19/597**(2014.01)i; **H04N 19/513**(2014.01)i; **H04N 19/20**(2014.01)i; **H04N 19/70**(2014.01)i; **G06T 9/00**(2006.01)i; **H04N 19/119**(2014.01)i; **H04N 19/96**(2014.01)i; **H04N 19/85**(2014.01)i

According to International Patent Classification (IPC) or to both national classification and IPC

**B.    FIELDS SEARCHED**

Minimum documentation searched (classification system followed by classification symbols)

H04N 19/54(2014.01); G06F 7/48(2006.01); G06N 7/00(2006.01); G06T 17/20(2006.01); G06T 9/00(2006.01); G06T 9/40(2006.01); H04N 19/597(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 바운딩 박스(bounding box), 참조(reference), 프레임(frame), 애지무스(azimuth), 레이저 아이디(laser ID), 오브젝트(object), 리스트(list), 검색(search)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022-025552 A1 (LG ELECTRONICS INC.) 03 February 2022 (2022-02-03)<br>    See paragraph [0097]; claim 1; and figure 4. | 1,8-9,15 |
| Y | | 2-3,10-12 |
| A | | 4-7,13-14 |
| Y | LOI, Keng Liang et al. [G-PCC][New]Inter Prediction for Improved Quantization of Azimuthal Angle in Predictive Geometry Coding. INTERNATIONAL ORGANISATION FOR STANDARDISATION. ISO/IEC JTC 1/SC 29/WG 7, m57351. 02 July 2021.<br>    [Retrieved on 20 March 2023]. Retrieved from <URL: https://mpeg-pcc.org/index.php/public-contributions/panasonic-contribution-mpeg135>.<br>    See sections 2-4.1. | 2,10 |
| Y | US 2021-0217202 A1 (FUTUREWEI TECHNOLOGIES, INC.) 15 July 2021 (2021-07-15)<br>    See paragraphs [0157] and [0176]; and figure 18. | 3,11-12 |

☑ Further documents are listed in the continuation of Box C.      ☑ See patent family annex.

| | | |
| --- | --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family | |

| Date of the actual completion of the international search | Date of mailing of the international search report |
| --- | --- |
| **23 March 2023** | **24 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 503 609 A1**

**INTERNATIONAL SEARCH REPORT**

| | International application No. |
|---|---|
| | **PCT/KR2022/021036** |

**C.    DOCUMENTS CONSIDERED TO BE RELEVANT**

| Category* | Citation of document, with indication, where appropriate, of the relevant passages | Relevant to claim No. |
|---|---|---|
| A | US 2021-0326734 A1 (QUALCOMM INCORPORATED) 21 October 2021 (2021-10-21)<br>See paragraphs [0004]-[0019]; and claims 1-11. | 1-15 |
| A | US 2021-0407143 A1 (QUALCOMM INCORPORATED) 30 December 2021 (2021-12-30)<br>See paragraphs [0004]-[0008]; and claims 1-9. | 1-15 |

Form PCT/ISA/210 (second sheet) (July 2022)

**INTERNATIONAL SEARCH REPORT**
Information on patent family members

International application No.

**PCT/KR2022/021036**

| Patent document cited in search report | | | Publication date (day/month/year) | Patent family member(s) | | | Publication date (day/month/year) |
|---|---|---|---|---|---|---|---|
| WO | 2022-025552 | A1 | 03 February 2022 | None | | | |
| US | 2021-0217202 | A1 | 15 July 2021 | BR | 112021006256 | A2 | 06 July 2021 |
| | | | | CN | 112771850 | A | 07 May 2021 |
| | | | | CN | 112771850 | B | 24 May 2022 |
| | | | | EP | 3850832 | A1 | 21 July 2021 |
| | | | | JP | 2022-502961 | A | 11 January 2022 |
| | | | | JP | 7187688 | B2 | 12 December 2022 |
| | | | | KR | 10-2021-0069683 | A | 11 June 2021 |
| | | | | SG | 11202103302 | A | 29 April 2021 |
| | | | | WO | 2020-072579 | A1 | 09 April 2020 |
| US | 2021-0326734 | A1 | 21 October 2021 | AU | 2021-251204 | A1 | 14 October 2021 |
| | | | | BR | 112022019529 | A2 | 16 November 2022 |
| | | | | CA | 3174112 | A1 | 14 October 2021 |
| | | | | CN | 115315725 | A | 08 November 2022 |
| | | | | CN | 115413351 | A | 29 November 2022 |
| | | | | CO | 2022014269 | A2 | 08 November 2022 |
| | | | | EP | 4133456 | A1 | 15 February 2023 |
| | | | | EP | 4133458 | A1 | 15 February 2023 |
| | | | | IL | 295695 | A | 01 October 2022 |
| | | | | KR | 10-2022-0164702 | A | 13 December 2022 |
| | | | | KR | 10-2022-0166790 | A | 19 December 2022 |
| | | | | KR | 10-2022-0166792 | A | 19 December 2022 |
| | | | | KR | 10-2022-0166793 | A | 19 December 2022 |
| | | | | TW | 202147788 | A | 16 December 2021 |
| | | | | TW | 202147854 | A | 16 December 2021 |
| | | | | US | 11580672 | B2 | 14 February 2023 |
| | | | | US | 2021-0327095 | A1 | 21 October 2021 |
| | | | | US | 2021-0327098 | A1 | 21 October 2021 |
| | | | | US | 2021-0327099 | A1 | 21 October 2021 |
| | | | | WO | 2021-207495 | A1 | 14 October 2021 |
| | | | | WO | 2021-207499 | A1 | 14 October 2021 |
| | | | | WO | 2021-207501 | A1 | 14 October 2021 |
| | | | | WO | 2021-207502 | A1 | 14 October 2021 |
| US | 2021-0407143 | A1 | 30 December 2021 | TW | 202205864 | A | 01 February 2022 |
| | | | | WO | 2021-262540 | A1 | 30 December 2021 |

Form PCT/ISA/210 (patent family annex) (July 2022)